(19) Europäisches Patentamt / European Patent Office / Office européen des brevets

(11) **EP 1 648 111 B1**

(12) **EUROPEAN PATENT SPECIFICATION**

(45) Date of publication and mention
of the grant of the patent:
**15.01.2014 Bulletin 2014/03**

(51) Int Cl.:
***G06F 7/72*** (2006.01)  ***H04L 9/30*** (2006.01)

(21) Application number: **03741543.7**

(22) Date of filing: **22.07.2003**

(86) International application number:
**PCT/JP2003/009284**

(87) International publication number:
**WO 2005/008955 (27.01.2005 Gazette 2005/04)**

(54) **TAMPER-RESISTANT ENCRYPTION USING A PRIVATE KEY**

MANIPULATIONSBESTÄNDIGE VERSCHLÜSSELUNG MIT GEHEIMEM SCHLÜSSEL

CHIFFREMENT INFALSIFIABLE UTILISANT UNE CLE PRIVÉE

(84) Designated Contracting States:
**DE FI FR GB IT NL**

(43) Date of publication of application:
**19.04.2006 Bulletin 2006/16**

(73) Proprietor: **FUJITSU LIMITED**
**Kawasaki-shi, Kanagawa 211-8588 (JP)**

(72) Inventors:
• **ITOH, Kouichi,**
**Fujitsu Limited**
**Kawasaki-shi,**
**Kanagawa 211-8588 (JP)**
• **IZU, Tetsuya,**
**Fujitsu Limited**
**Kawasaki-shi,**
**Kanagawa 211-8588 (JP)**
• **TAKENAKA, Masahiko,**
**Fujitsu Limited**
**Kawasaki-shi,**
**Kanagawa 211-8588 (JP)**
• **TORII, Naoya,**
**Fujitsu Limited**
**Kawasaki-shi,**
**Kanagawa 211-8588 (JP)**

(74) Representative: **Sunderland, James Harry**
**Haseltine Lake LLP**
**Lincoln House**
**300 High Holborn**
**London**
**WC1V 7JH (GB)**

(56) References cited:
**WO-A-00/59157      WO-A1-01/24439**
**JP-A- 2000 187 438      JP-A- 2001 195 555**
**JP-A- 2001 337 599      JP-A- 2002 540 483**
**JP-A- 2002 540 484      JP-A- 2003 177 668**

**Description**

FIELD OF THE INVENTION

The present invention relates generally to the field of cryptography, and more particularly to tamper-proof encryption/decryption with provisions for preventing power analysis attacks, such as SPA, DPA and RPA, in a processor for elliptic curve cryptosystem.

BACKGROUND OF THE INVENTION

Services provided over networks are spreading widely, as exemplified by the electronic payment over the network, and the Japanese Resident Registration Network. These services use encryption for information security.

The smart card that contains an IC chip for storing user's secret information is expected to spread widely as a user device in such services. The smart card has the functions of encryption, digital signature and authentication, and uses its secret information as a key. Since such secret information is stored in the IC chip memory, the smart card achieves significantly high security or tamper resistance against unauthorized access by a third party, in comparison with a magnetic card.

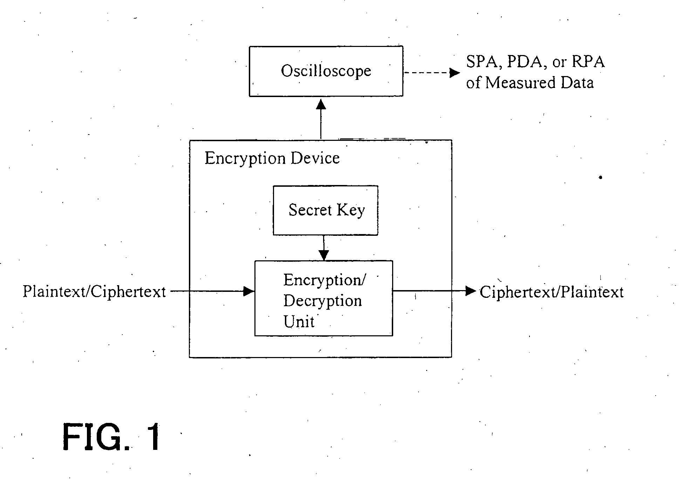

FIGURE 1 shows an example of the configuration of encryption/decryption with a secret key in an encryption device, such as a smart card. In FIGURE 1, the encryption device processes an input plaintext/ciphertext message with a private key in its encryption/decryption unit, in a well known manner, to provide an output ciphertext/plaintext message. Cryptosystems generally includes a public key cryptosystem and a common key cryptosystem.

The public key cryptosystem uses different keys for decryption and encryption, respectively. Typically, a plaintext is encrypted with a public key, and a ciphertext is decrypted with a private or secret key, to thereby provide secure transmission of the ciphertext. In addition, the plaintext may be encrypted with a private key, and the ciphertext may be decrypted with a public key, to thereby identify the user who has encrypted the plaintext, for digital signature and authentication. In the public key cryptosystem, no secret key is required to be shared by the transmitter and the receiver, but its amount of computation is much larger than the common key cryptosystem. The public key cryptosystem includes the RSA encryption and the elliptic curve encryption.

The RSA encryption is based on modular exponentiation expressed by $z = a^x$ (mod n). The cryptographic function based on the RSA encryption is related to encryption, decryption, signature generation, and signature verification. In the decryption and signature generation, user's secret information is used as a private key. The modular exponentiation generates output data v that satisfies $v = a^d$ (mod n), where **a** denotes input data, mod n denotes modulo n for the remainder, and d denotes a private key.

The elliptic curve encryption is based on elliptic point scalar multiplication. The elliptic point scalar multiplication generates a point V that satisfies V = dA for a scalar value **d** and a point A on an elliptic curve. The cryptographic function based on the elliptic curve encryption is related to ECES encryption/decryption, ECDSA signature generation/signature verification, and ECDH secret key sharing. In the processing of ECES decryption, ECDSA signature generation, and ECDH secret key sharing, user's secret information is used as a private key. For example, in the processing for the shared ECDH secret key, the elliptic point scalar multiplication expressed by V = dA is performed to determine an elliptic point V expressing a shared secret value, where A denotes the point of a public key paired with the shared secret key, and d denotes the scalar value of the private key.

The modular multiplication $c = a \times b$ (mod n), the modular squaring $c = a^2$, and the modular exponentiation $c = a^x$ (mod n) in the RSA encryption correspond to the elliptic point addition C = A + B, the elliptic point doubling C = 2A, and the elliptic point scalar multiplication C = xA in the elliptic curve encryption, respectively.

Analysis for decryption or tampering is attempted by guessing secret information, including the secret key, from available information such as ciphertext. Power analysis attack which is one form of decryption was devised, in 1998 by Paul Kocher.

The power analysis attack is described in P. Kocher, J. Jaffe and B. Jun "Differential Power Anaysis", Crypto '99, LNCS 1666, pp.388-397, Springer-Verlag, 1999.

In this power analysis attack, different pieces of input data are provided to the encryption processor included in an encryption device, such as a smart card. During this process, changes in power dissipation over time are measured using an oscilloscope or the like, for example, as shown in FIGURE 1, and a statistically sufficient number of power dissipation curves are collected and analyzed to guess key information held within the encryption processor. This power analysis attack can be applied to both of the common key cryptosystem and the public key cryptosystem.

The power analysis attacks include simple power analysis (SPA) and differential power analysis (DPA). The SPA guesses the secret key from the characteristic of a single power dissipation curve taken from the encryption processor. The DPA guesses the secret key by analyzes the differences between many different power dissipation curves (hereinafter referred to as the power difference curves). Generally, the DPA is more powerful than SPA.

The requirements of protection against the power analysis attack are described in the different international standards. For example, in the protection profile (PP) for the smart card in accordance with the International Standard ISO 15408 related to the security, protection is mandatory for countermeasure against the power analysis attack. On the other hand, in the U.S. Standard FIPS 140-2 related to encryption modules, only there is currently a comment only on the need for protection for countermeasure against the power analysis attack. However, protection for countermeasure against the power analysis attack will become mandatory in the future.

Different countermeasures have been developed for preventing the power analysis attacks SPA and DPA on the RSA and the elliptic curve encryption. However, a refined power analysis (RPA) attack has been released in L. Goubin, "A Refined Power-Analysis Attack on Elliptic Curve Crypto-systems", PKC 2003, LNCS 2567, Springer-Verlag, 2003. This attack is effective to attacking a part of ciphertext in the public key cryptosystem which prevents the power analysis attack on elliptic curve encryption.

Next, technical terms used in elliptic curve encryption are described below. See the Standard IEEE P1363/D13 (Draft Version 13, November 12, 1999) main document, Standard Specifications for Public Key Cryptography, http://grouper.ieee.org/groups/1363/P1363/ draft.html for details.

A curve expressed by a function of variables x and y like the following is called an elliptic curve.

An elliptic curve (over a prime field): $y^2 = x^3 + ax + b$ (mod p),

where p is a prime number, and **a** and **b** are elliptic parameters ($0 \leq a, b < p$).

An elliptic curve (over a binary field) : $y^2 + xy = x^3 + ax^2 + b$ (mod f(x))),

where f represents a polynomial of $GF(2^m)$, and a and b are elliptic parameters (a, b $\subseteq GF(2^m)$).

An elliptic curve are mainly defined over a prime field and a binary field. An elliptic curve is determined uniquely by the elliptic parameters **a** and **b**.

A point (elliptic point) on an elliptic curve has coordinates (x, y) that satisfy the formula expressing the elliptic curve. The elliptic points represent a set of integers (x, y) that satisfy $0 \leq x, y < p$ over a prime field, and represent a set of elements (x, y) that satisfy (x, y) $\subseteq GF(2^m)$ over a binary field.

An infinite elliptic point denoted by O is a special point on an elliptic curve that satisfies A + O = O+A = A for an arbitrary elliptic point A, where the symbol "+" indicates addition of elliptic points.

A base elliptic point is a point on an elliptic curve, and denoted by G. The base elliptic point is shared by the users of elliptic curve encryption, and used for generating a pair of a public key and a private key and for other processing based on the elliptic curve encryption.

A representation of an elliptic point with a two-dimensional vector (x, y) is called affine coordinates. A representation of an elliptic point with a three-dimensional vector (X, Y, Z) that satisfies (x, y) = (X/Z, Y/Z) is called projective coordinates. A representation of an elliptic point with a three-dimensional vector (X, Y, Z) that satisfies (x, y) = (X/Z², Y/Z³) is called Jacobian coordinates. The use of three-dimensional vector representations significantly reduces the number of times of division in the elliptic point scalar multiplication to thereby speed up the entire computation.

An operation of A + B on elliptic points A and B is called an elliptic point addition, where the points satisfies A + B = B + A. An operation of A - B on elliptic points A and B is called an elliptic point subtraction.

An operation of elliptic point doubling derives a point C defined as C = 2A on an elliptic curve, from a point A on the elliptic curve. This operation of 2A is called elliptic point doubling.

An operation of elliptic point scalar multiplication derives a point V defined as V = dA on an elliptic curve, from a point A on the elliptic curve and a scalar value d. This operation consists of a combination of the elliptic point addition, the elliptic point subtraction, and the elliptic point doubling.

For a base elliptic point G and a scalar value d representing a private key, a public key is given by V that satisfies V = dG. The public key is a point on the elliptic curve, and the private key is a scalar value.

Next, the power analysis attack is described below.

Algorithms for implementing the modular exponentiation or the elliptic point scalar multiplication include a binary method, a signed binary method, and a window method. It is assumed that the attacker knows the algorithm of modular exponentiation or elliptic point scalar multiplication implemented in the smart card.

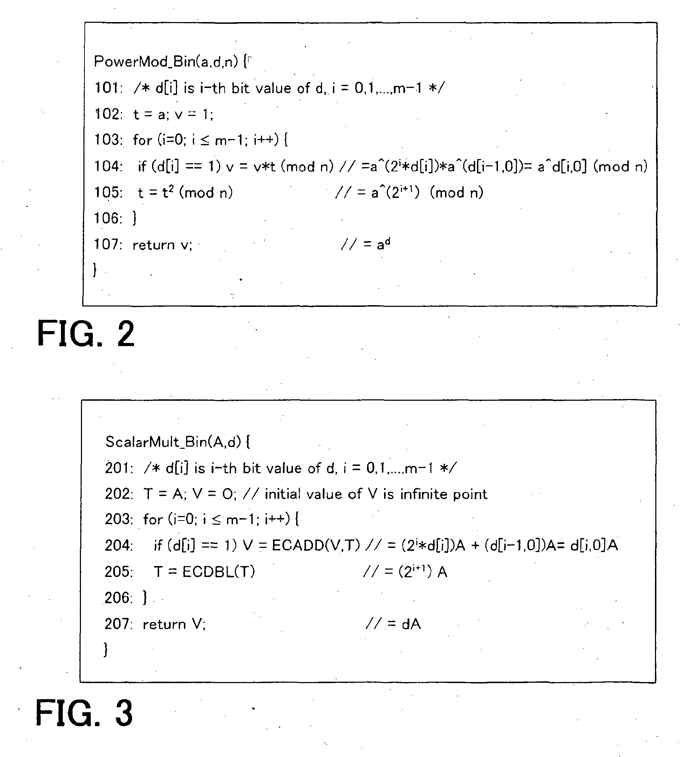

FIGURE 2 shows an algorithm of modular exponentiation in accordance with the conventional binary method. For given base **a**, exponent **d** and modulo n, a value of the modular exponentiation v = $a^d$ (mod n) is determined. FIGURE 3 shows an algorithm of elliptic point scalar multiplication in accordance with the conventional binary method. For given elliptic point A and scalar value d, an elliptic point V = dA representative of the scalar multiplication of the elliptic point is determined, where d is a binary value of m bits. The i-th bit value of the binary value d is denoted by d[i] (i = 0, 1,... , m-1). The value of a string from the i-th bit to the j-th bit (i $\geq$ j $\geq$ 0) of the binary value d is expressed by d[i, j]. For example, for d = 19 = $(10011)_2$, d[4] = 1, d[3] = 0, d[2] = 0, d[1] = 1, and d[0] = 1, and further d[0, 0] = $(1)_2$ = 1, d[1, 0] = $(11)_2$ = 3, d[2, 0] = $(011)_2$ = 3, d[3, 0] = $(0011)_2$ = 3, d[4, 0] = $(10011)_2$ = 19, and d[4, 1] = $(1001)_2$ = 9. ECADD represents the elliptic point addition, and ECDBL represents the elliptic point doubling.

Referring to FIGURE 2, at Step 102, work variables t and v are initialized as t = a and v = 1, respectively. Steps 103-106 form a loop for i. In this loop, the squaring at Step 105 for d[i] = 0, and then both of the multiplication at Step 104 and the squaring at Step 105 for d[i] = 1 are performed successively for i = 0, 1, ... , m-1. After Step 106, the value of the work variable v is expressed by $v = a^{d[i, 0]} \pmod n$.

Referring to FIGURE 3, at Step 202, work variables T and V are initialized as T = A and V = O, respectively. Steps 203-206 form a loop for i. In this loop, the doubling is for d[i] = 0 at Step 205, and both of the elliptic point addition (ECADD) at Step 204 and doubling (ECDBL) at Step 205 for d[i] = 1 are performed successively for i = 0, 1,... , m-1. After Step 206, the value of the work variable V is expressed by V = d[i, 0].

The following correlations (COR.1) and (COR.2) hold between the algorithm and the private key d of FIGURE 2 or 3.

(COR.1) There is correlation between the bit values of the value d and the operations performed. In the algorithm of FIGURE 3, the ECDBL solely or both of the ECDBL and ECADD are performed in accordance with the bit values of d.

(COR.2) There is correlation between the bit values of the value d and the values of the work variable. In the algorithm of FIGURE 3, the value of V after Step 106 is expressed by $V = (d[i, 0])A = (2^i d[i])A + (d[i-1, 0])A$.

The SPA determines the private key in accordance with the correlation (COR.1) above. The DPA guesses the private key in accordance with the correlation (COR.2). The RPA guesses the private key in accordance with any one of the correlations (COR.1) and (COR.2).

The SPA measures a single power waveform, and then guesses the processing performed in the smart card, to thereby guess the private key.

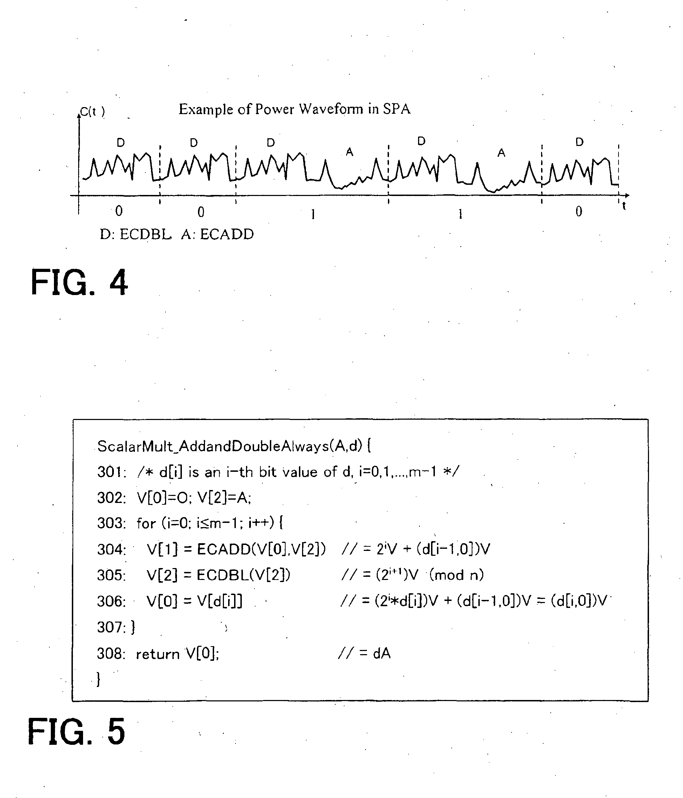

For example, it is assumed that the power consumption of a smart card that processes the algorithm of FIGURE 3 is measured so that the power waveform illustrated in FIGURE 4 is obtained. As shown in FIGURE 4, if the obtained power consumption waveforms A and D have distinct shapes permitting the identification of the ECADD and ECDBL, then in accordance with correlation (COR.1), a group consisting of a power waveform D and a subsequent power waveform A corresponds to a bit value of one (1), while a special or distinctive waveform D corresponds to a bit value of zero (0). In this manner, a bit sequence "00110" for the private key is obtained.

Known countermeasures against the SPA include the Add-and-Double-Always and the Montgomery-Ladder, in which fixed computing procedure is repeated independently of the bit values of the private key d.

The Add-and-Double-Always is described in J. Coron, "Resistance against differential power analysis for elliptic curve cryptographic cryptosystem", CHES '99, LNCS 1717, pp.292-302, Springer-Verlag, 1999.

The Montgomery-Ladder is described in P. Montgomery, "Speeding the Pollard and elliptic curve methods for factorizations", Math of Comp, vol.48, pp.243-264, 1987.

FIGURE 5 shows an algorithm of the conventional Add-and-Double-Always. In this case, the computing procedure is a sequence of the ECADD, ECDBL, ECADD, ECDBL,... , ECADD, ECDBL, independently of the bit values of the private key d.

The DPA measures and analyzes a plurality of power waveforms, and thereby guesses the private key. The following procedure (DPA.01) through (DPA.03) gives an example of the DPA against the algorithm of FIGURE 3.

(DPA.01) For k elliptic points $A_0$, $A_1$, $A_2$,..., $A_{k-1}$ given at random, power consumption is measured for the duration of performing each multiplication of $A_j$ by d. The set of the k pieces of power consumption data measured during the scalar multiplication on $A_j$ is denoted by $C(A_j, t)$ (j = 0, 1,..., k-1).

(DPA.02) The value of d[0] is guessed in accordance with the following procedure, and then the correctness of the guess is determined.

- The guess value d[0] is assumed to be correct. Based on this assumption, the data value of the coordinates x of the variable V inside the smart card at the time when Steps 203-206 have been completed for i = 0 is guessed for each $A_j$. For example, if it is assumed that d[0] = 1, then $V = A_j$ is guessed in accordance with the algorithm of FIGURE 3. As a result of the guess, if the least significant bit of the data value of V is 1, then $C(A_j, t)$ is classified into $G_1$. In contrast, if the least significant bit of the data value of V is 0, then $C(A_j, t)$ is classified into $G_0$. The data value of V used in the classification may be the data value of y or z instead of x.

- In accordance with the above-mentioned classification, a power difference curve is generated that is expressed as follows:

$$\Delta(t) = \{\text{average of } C(A_i, t)\text{'s} \in G_1\} - \{\text{average of } C(A_i, t)\text{'s} \in G_0\}.$$

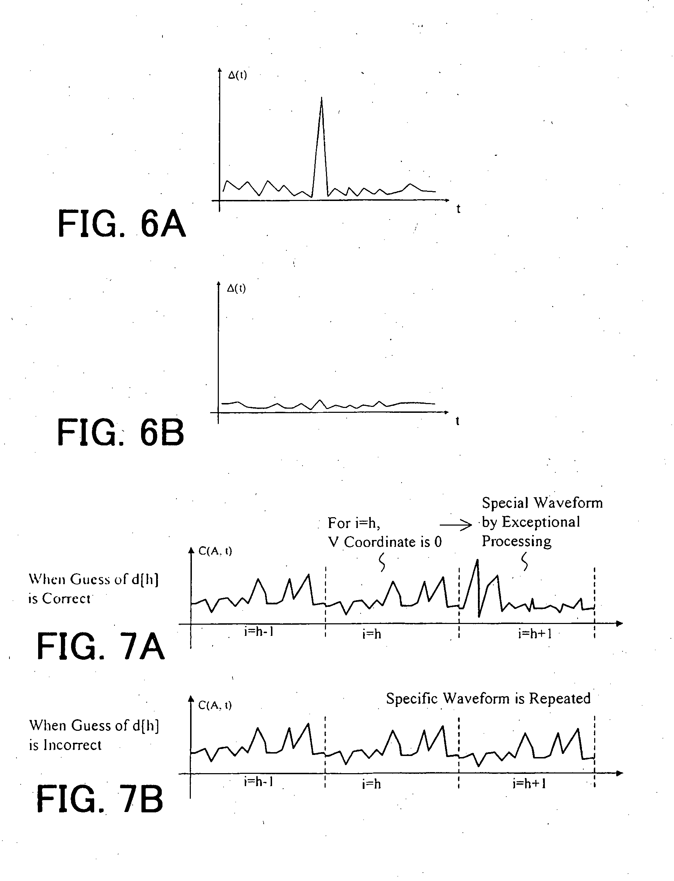

- When the power difference curve has a spike as shown in FIGURE 6A, the guess value of d[0] is determined to be correct. In contrast, when the power difference curve is flat as shown in FIGURE 6B, the guess value of d[0] is determined to be incorrect.

(DPA.03) Procedure (DPA.02) is repeated sequentially for d[1], d[2],... , d[m-1], so that the value of the private key d is determined. For performing procedure (DPA.02) for d[h], the data of V used as the criteria of the classification in procedure (DPA.02) is the data previously determined at the time of the procedure for i = h. In the guess of the data value of V, the previously determined values d[0] through d[h-1] and the current guess value of d[h] are used. This is so because the value of V is such a value determined by V = $2^h$d[h]A + d[h-1,0]A, i.e., the previously obtained d[0] through d[h-1] and the current guess value d[h].

The DPA is based on the characteristics that the power consumption of the smart card is proportional to the number of one's (1's) in the data value.

A known typical countermeasure against the DPA uses a random value. In this method, variable data is concealed or randomized using a random value generated inside the smart card, so that the guess for the data values by the DPA is prevented.

For example, in a so-called randomized projective coordinate system, the data representation of an elliptic point in projective coordinates or Jacobian coordinates is randomized. In this case, in the conventional encryption processing, for a work variable (x, y) expressed in the affine coordinates, this work variable is transformed into the projective coordinates (r $\times$ x, r $\times$ y, r $\times$ z) or into the Jacobian coordinates ($r^2 \times$ x, $r^3 \times$ y, r $\times$ z), where r indicates a random value. This random value r randomizes all of the coordinate data. Thus, the guess of the value of the work variable becomes impossible, so that the DPA is prevented. Although the value of the work variable is thus randomized, the value of any one of the work variables specifies the same point independently of the random value r. Thus, after determining d[0] through d[m-1], the determined coordinates are inversely transformed into affine coordinates, to thereby determine the same operated result $dA_j$ uniquely as that of the conventional operation.

Next, the RPA is described below. The RPA guesses the bit value of the private key d, then selects a specific input elliptic point in accordance with the bit value, and then provides it as an input of the scalar multiplication of the encryption device, to thereby guess the private key d. When the work variable value at a specific timing of the scalar multiplication is zero (0), the guess of the bit value is determined to be correct in the RPA. Otherwise, the guess is determined to be incorrect. Whether the work variable value is zero can be determined using a single power waveform in the SPA or using the difference of a plurality of power waveforms in the DPA.

The following procedure of (RPA.01) through (RPA.03) gives an example of the RPA against the algorithm of FIGURE 3. In the RPA, the attacker determines the next bit value d[h] in accordance with previously obtained d[0], d [1],... , d[h-1].

(RPA.01) A = (d[h, 0]$^{-1}$ (mod $\varphi$))Q is determined in accordance with the known values d[0], d[1],... , d[h-1] and the guess value d[h], where $\varphi$ denotes the value of the order, and Q denotes a point on an elliptic curve satisfying Q = (x, 0) or (0, y), i.e., a set of coordinates which has the coordinate x or y equal to zero.

(RPA.02) The smart card is caused to perform the operation of dA, to thereby determine a power consumption waveform C (A, d).

(RPA.03) In the curve of the power consumption waveform C(A, d), a partial waveform corresponding to i = h and h+1 at Steps 203-206 is observed, and then it is determined whether the coordinate x of the work variable V is zero. See the document Goubin described above for the way of determining whether the coordinate x of V is zero.

The RPA is possible, because when the guess of d[h] is correct, the coordinate x or y of the work variable V becomes zero after the loop of Steps 203-206 is completed for i = h. For the coordinate x or y of V which becomes zero, an exceptional operation occurs when this value is used in the arithmetic operation for i = h + 1. Then, the exceptional operation is observed in the power waveform.

FIGURES 7A and 7B illustrate power waveforms in the RPA.

When the guess of d[h] is correct, a waveform indicating the coordinate value of V appears after the loop for i = h. This is so because A is given in accordance with procedure (RPA.01). By giving such A, the value of V after the loop of Steps 203-206 for i = h becomes equal to Q, if the guess of d[h] is correct. Thus, the value of the coordinate x or y becomes zero (0).

Accordingly, the RPA can be prevented, by preparing an algorithm so as to prevent the coordinate value of the work variable from becoming zero (0) at the timing anticipated by the attacker.

The RPA is prevented basically by a countermeasure against the DPA that randomizes the data. However, there is an exception. For example, the randomized projective coordinate system which is one of the countermeasures against the DPA is vulnerable to the RPA. This is so because, when the work data in a process without a countermeasure against the DPA is denoted by (X, Y, Z), the work data is expressed by (r $\times$ X, r $\times$ Y, r $\times$ Z) in the randomized projective coordinate system. Thus, when the coordinate value in the process without a countermeasure against the DPA is zero (0), the coordinate value in the randomized projective coordinate system also becomes zero (0) independently of the value of r.

Izu et al. "Comparison and Evaluation of Side Channel Attack Countermeasure for Elliptic Cryptosystem" 2003, Symposium on Cryptography and Information Security (SCI 2003), 8D-3 released by the inventors describes that the most secure countermeasures against the power analysis attack to the public key cryptosystem corresponding to the elliptic cryptosystem are the four countermeasures, Randomized Projective Coordinates (RPC), Randomized Curve (RC), Exponent Splitting (ES), and Point Blinding (PB) against the SPA and the DPA. These are countermeasures against the DPA, but can be used together with the countermeasure against the SPA, to thereby prevent both of the DPA and the SPA.

Table 1 shows the comparison of security of the public key cryptosystem used together with the Add-and-Double-Always, against the SPA, the DPA and the RPA, and of the amount of processing required for the elliptic point scalar multiplication.

TABLE 1 SECURITY OF PUBLIC KEY CRYPTOSYSTEM AND OF ELIPTIC SCALAR POINT MULTIPLICATION

|  | RPA | SPA | DPA | PROCESSING TIME |
|---|---|---|---|---|
| RPC | V | S | S | E + I |
| RC | V | S | S | E + I |
| ES | S | S | S | 2E + A |
| PB | S | S | S | 2E + 3A |

In TABLE 1, S indicates that the system is secure against the power analysis attack, and V indicates that the system is vulnerable to the power analysis attack. E denotes the processing time of the elliptic point scalar multiplication in the Add-and-Double-Always of FIGURE 5, and A denotes the amount of processing of the elliptic point addition, subtraction and doubling, and I denotes the amount of processing for determining the inverse elements. Generally, E is much bigger than I and A.

The RPC and the RC achieve high-speed processing, but vulnerable to the RPA. The ES and the PB are secure against the RPA, but are slow.

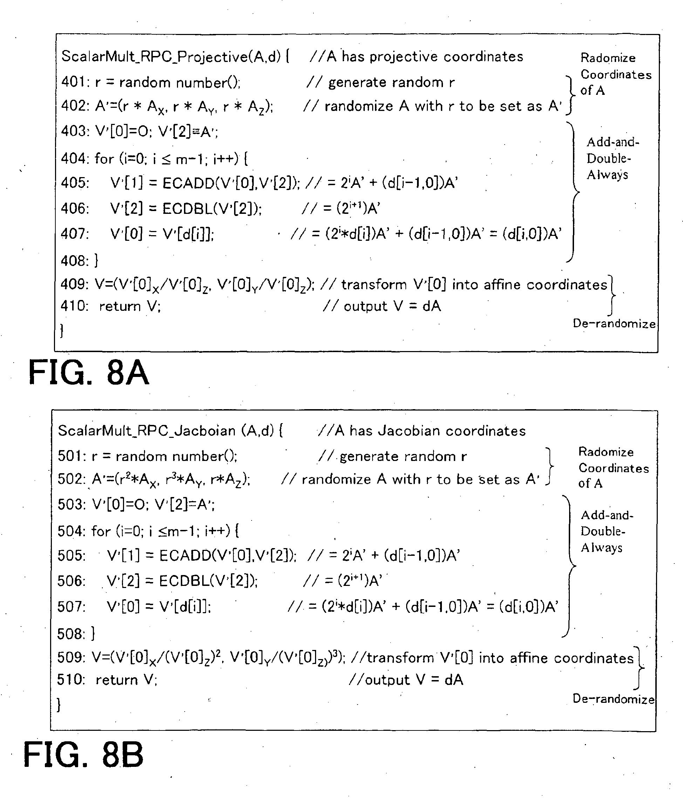

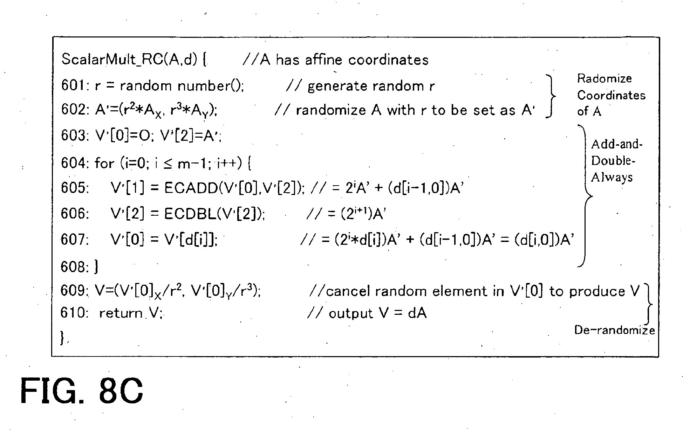

FIGURE 8A shows an algorithm of the RPC in the projective coordinate system. FIGURE 8B shows an algorithm of the RPC in the Jacobian coordinate system. FIGURE 8C shows an algorithm of the RC in the affine coordinate system.

Each of these algorithms includes the following three stages: (i) randomizing the coordinate data of an input elliptic point A (Steps 401-402 of FIGURE 8A, Steps 501-502 of FIGURE 8B, and Steps 601-602 of FIGURE 8C); (ii) performing scalar multiplication using the Add-and-Double-Always (Steps 403-408 of FIGURE 8A, Steps 503-508 of FIGURE 8B, and Steps 603-608 of FIGURE 8C); and (iii) de-randomizing the operated data and then providing the operation result as an output (Steps 409-410 of FIGURE 8A, Steps 509-510 of FIGURE 8B, and Steps 609-610 of FIGURE 8C).

Stage (i) is a process for countermeasure against the DPA. A random value r is generated. Then, the coordinate data is randomized in accordance with $A' = (r \times A_X, r \times A_Y, r \times A_Z)$ in FIGURE 8A, $A' = (r^2 \times A_X, r^3 \times A_Y, r \times A_Z)$ in FIGURE 8B, and $A' = (r^2 \times A_X, r^3 \times A_Y)$ in FIGURE 8C, to thereby prevent the attacker from guessing the data, where $A_X$, $A_Y$ and $A_Z$ denote the coordinates (X, Y, Z) of the elliptic point A, respectively.

Stage (iii) is a process of de-randomizing the data to provide as an output the processed value which is the same as that of conventional encryption processing. The operation of $V = (V[0]_X/V[0]_Z, V[0]_Y/V[0]_Z)$ is performed in FIGURE 8A, the operation of $V = (V[0]_X/ (V[0]_Z))^2; V[0]_Y/(V[0]_Z)^3)$ is performed in FIGURE 8B, and the operation of $V = (V[0]_X/r^2, V[0]_Y/r^3)$ is performed in FIGURE 8C.

However, these countermeasures have no effect on the RPA. This is so because the product of the coordinate values and the random value r is introduced in the randomization at stage (i). For example, in FIGURE 8C, when the work variable data without randomization is denoted by $V = (V_X, V_Y)$, the work variable data at Steps 603-608 of stage (i) is expressed by $V' = (r^2 \times V_X, r^3 \times V_Y)$. Thus, when either one of the values of the coordinates X and Y of V without randomization is zero (0), the either one of the values of the randomized coordinates X and Y of V' becomes zero independently of the random value r, which satisfies the condition that permits the application of the RPA. Similarly, the RPC shown in FIGURES 8A and 8B does not provide protection against the RPA.

The RPC and the RC requires one time of the Add-and-Double-Always operation and one time of the inverse element operation for the de-randomization, for a total processing time of E + I.

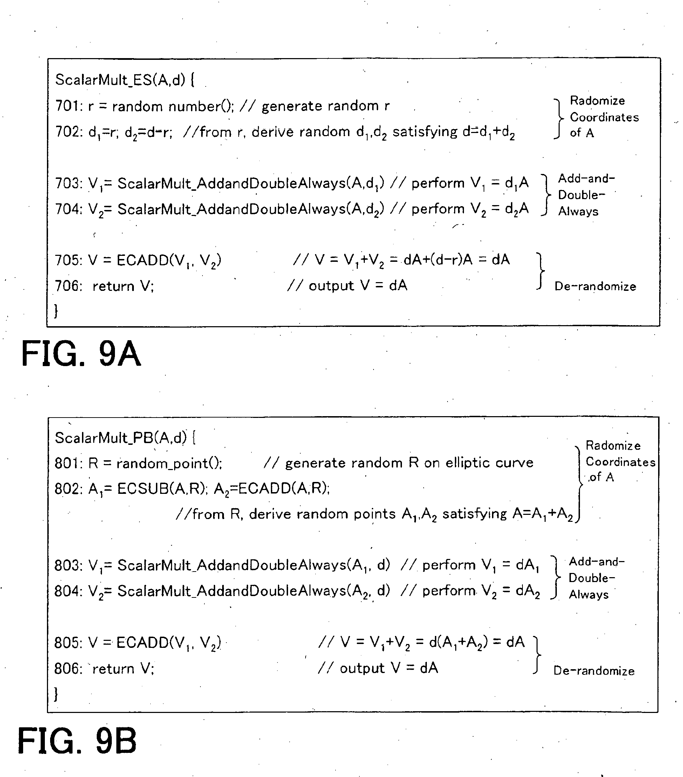

FIGURE 9A shows an algorithm of the ES, and FIGURE 9B shows an algorithm of the PB.

Similarly to the algorithms of FIGURES 8A-8C, each of these algorithms includes the following three stages: (i) randomizing the coordinate data of an input elliptic point A (Steps 701-702 of FIGURE 9A and Steps 801-802 of FIGURE 9B); (ii) performing the scalar multiplication using the Add-and-Double-Always (Steps 703-704 of FIGURE 9A and Steps 803-804 of FIGURE 9B); and (iii) de-randomizing the operated data and then providing the operation result as an output (Steps 705-706 of FIGURE 9A and Steps 805-806 of FIGURE 9B).

In FIGURE 9A, at stage (i), random scalar values $d_1$ and $d_2$ that satisfy $d = d_1 + d_2$ are generated for a scalar value d. At stage (ii), scalar multiplication expressed by $V_1 = d_1A$ and $V_2 = d_2A$ for $d_1$ and $d_2$ described above is performed in accordance with the Add-and-Double-Always operation of FIGURE 5. The work variables are randomized by the scalar multiplication for the random $d_1$ and $d_2$, to thereby provide countermeasure against the DPA. Further, the stages (i) and (ii) prevent the coordinate values of the work variables from becoming zero at the timing anticipated by the attacker. This provides countermeasure against the RPA. At stage (iii), the operation of $V = V_1 + V_2 = dA + (d-r)A = dA$ de-randomizes the data, and provides dA as an output.

In FIGURE 9B, at stage (i), random elliptic points $A_1$ and $A_2$ that satisfy $A = A_1 + A_2$ are generated for an input elliptic point A. At stage (ii), scalar multiplication expressed by $V_1 = dA_1$ and $V_2 = dA_2$ for the elliptic points $A_1$ and $A_2$ described above is performed in accordance with the Add-and-Double-Always operation of FIGURE 5. The work variables are randomized by the scalar multiplication for the random elliptic points $A_1$ and $A_2$, to thereby provide countermeasure against the DPA. Further, the stages (i) and (ii) prevent the coordinate values of the work variables from becoming zero at the timing intended by the attacker. This provides countermeasure against the RPA. At stage (iii), the operation of $V = V_1 + V_2 = d(A_1 + A_2) = dA$ de-randomizes the data, and provides dA as an output.

The ES requires two times of the Add-and-Double-Always operation, and one time of the elliptic point addition operation for the de-randomization, for a total processing time of 2E + A. The PB requires two times of the Add-and-Double-Always operation, and three times of the elliptic point addition or subtraction operation for randomizing the data and for de-randomizing the data, for a total processing time of 2E + 3A.

Therefore, the known processing for the public key cryptosystem that requires a small amount of processing of the elliptic point scalar multiplication is vulnerable to the RPC, while the other known processing for public key cryptosystem that is secure against the RPC requires a large amount of processing of the elliptic point scalar multiplication.

WO 00/59157 relates to a countermeasure method in an electronic component implementing an elliptical curve based public key cryptography algorithm, comprising the calculation of a new decryption integer d' such as the decryption of an encrypted message with the aid of a decryption algorithm on the basis of a private key d and the number of points n of said elliptical curve whereby the same result is achieved with d' as with d, by performing the operation Q=d*P, whereby P is a point of the curve. The method comprises four steps: 1) a security parameter s is determined, whereby in practice it is impossible to take s as a neighbour of 30, 2) a random number k ranging from 0-21s is drawn, 3) the integer d'=d+k*n is calculated, 4) Q=d' .P is calculated.

The inventors have recognized that there is a need for providing a processing method for public key cryptosystem that requires a small amount of processing of the scalar multiplication and that is also secure against the SPA, the DPA and the RPC.

An object of the invention is to provide processing of public key encryption that requires a small amount of processing of the scalar multiplication and that is also secure against the SPA, the DPA and the RPC.

SUMMARY OF THE INVENTION

In accordance with an aspect of the present invention, there is provided an encryption device for performing elliptic encryption processing according to claim 1.

In accordance with another aspect of the present invention, an encryption device for performing modular exponentiation encryption processing with a private key according to claim 9.

The invention also relates to a program for implementing the encryption device described above.

The invention relates to a method for implementing the encryption device described above.

According to the invention, processing of public key encryption can be provided such that it requires a small amount of processing of the scalar multiplication and that is also secure against the SPA, the DPA and the RPC.

Throughout the drawings, similar symbols and numerals indicate similar elements.

BRIEF DESCRIPTION OF THE DRAWINGS

FIGURE 1 shows an example of the configuration of encryption/decryption with a secret key in an encryption device such as a smart card;

FIGURE 2 shows an algorithm of modular exponentiation in accordance with the conventional binary method;

FIGURE 3 shows an algorithm of elliptic point scalar multiplication in accordance with the conventional binary method;

FIGURE 4 shows a power waveform obtained by measuring power consumption of the smart card;

FIGURE 5 shows an algorithm of the conventional Add-and-Double-Always;

FIGURE 6A shows a power consumption curve relative to time, which has a spike;

FIGURE 6B shows a flat consumption curve relative to time;

FIGURES 7A and 7B illustrate power waveforms in the RPA;

FIGURE 8A shows an algorithm of the RPC in the projective coordinate system;

FIGURE 8B shows an algorithm of the RPC in the Jacobian coordinate system;

FIGURE 8C shows an algorithm of the RC in the affine coordinate system;

FIGURE 9A shows an algorithm of the ES;

FIGURE 9B shows an algorithm of the PB;

FIGURES 10 shows a schematic configuration of an encryption device in accordance with the present invention;

FIGURES 11 shows a basic algorithm for public key encryption processing provided with a countermeasure against the power analysis attack, in accordance with the invention, performed by the encryption device of FIGURE 10;

FIGURES 12 shows a basic algorithm performed by the encryption device of FIGURE 10, in which a countermeasure against the power analysis attack in accordance with the invention is applied to the elliptic curve encryption;

FIGURES 13 shows a basic algorithm provided with a countermeasure against the power analysis attack in accordance with the invention applied to the RSA encryption, performed by the encryption device of FIGURE 10;

FIGURES 14 to 16 show respective different algorithms of generating the random elliptic point R in FIGURE 12;

FIGURE 17 shows an algorithm of generating an elliptic point R in the projective coordinate system shown in FIGURE 12;

FIGURE 18 shows an algorithm of generating an elliptic point R in the Jacobian coordinate system shown in FIGURE 12;

FIGURE 19 shows an embodiment of the elliptic point doubling performed on the work variable V[2] in FIGURE 12; and

FIGURES 20 shows an embodiment of the basic algorithm in accordance with the invention shown in FIGURE 12, which is a combination of the algorithms of FIGURES 15, 16 and 19.

## DETAILED DESCRIPTION OF THE PREFERRED EMBODIMENTS

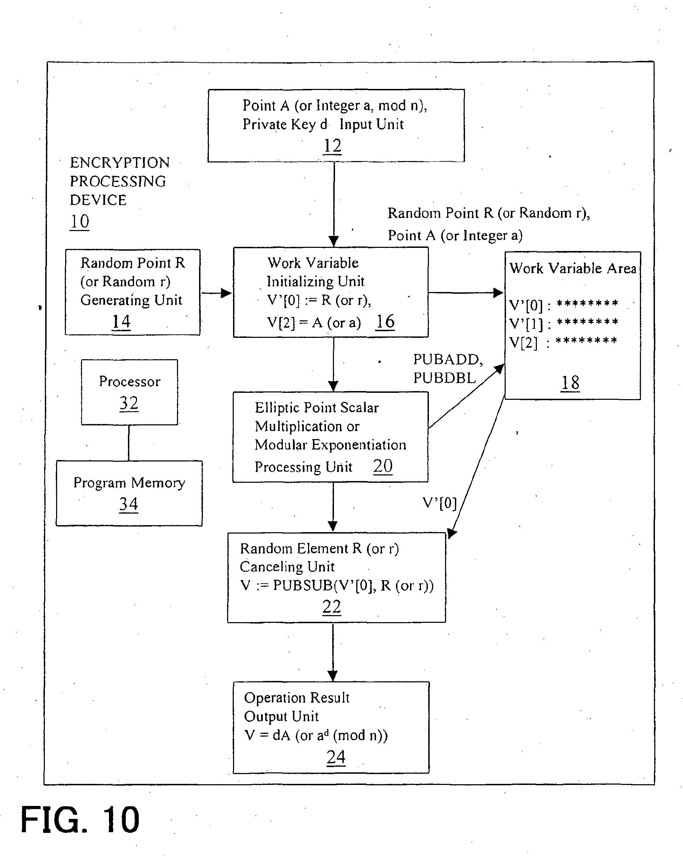

FIGURE 10 shows a schematic configuration of an encryption device 10 in accordance with the present invention. The encryption device 10 includes: an input unit 12 for inputting and providing values a, d and n, or alternatively, values A and d; a random value or elliptic point generating unit 14 for generating a random value R or r; a work variable initializing unit 16 for initializing work variables such,that V'[0]. := R (or r) and V[2] = A (or a), in accordance with the random value R or r received from the random value generating unit 14; and a memory 18 for storing the work variables V'[0], V'[1] and V[2]. The encryption device 10 further includes a scalar multiplication processing unit 20 for repeatedly performing the operations of Public Key Addition (PUBADD) and Public Key Doubling (PUBDBL) on the work variables of the initializing unit 16 with detecting the bit values of the value d, and thereby performing the operation of V'[0] = dA+R or $a^d \times r$ (mod n), where the PUBADD denotes elliptic point addition or modular multiplication modulo n, and the PUBDBL denotes elliptic point doubling or modular squaring modulo n. The procedure of performing the PUBADD and PUBDBL operations does not depend on the bit values of d. The encryption device 10 further includes a random element canceling unit for performing the operation of V = PUBSUB(V'[0], R or r) on V'[0] to determine V = dA in which the influence of R or r has been cancelled, where the public key subtraction PUBSUB denotes elliptic point subtraction, or modular multiplication modulo n using the inverse element of r. The encryption device 10 further includes an output unit 24 for providing the value of the operation result V = dA or V = $a^d$ (mod n) as an output, where R or r is a value generated inside the encryption device 10 and cannot be accessed from the outside.

The encryption device 10 further includes a processor 32 and a program memory 34 such as a ROM. The processor 32 controls the elements 12-24 described above in accordance with a program stored in the memory 34. Alternatively, the processor 32 may implement the elements 12-24 by executing a program stored in the memory 34 and corresponding to the functions of the elements 12-24. In this case, FIGURE 10 serves as a flow diagram.

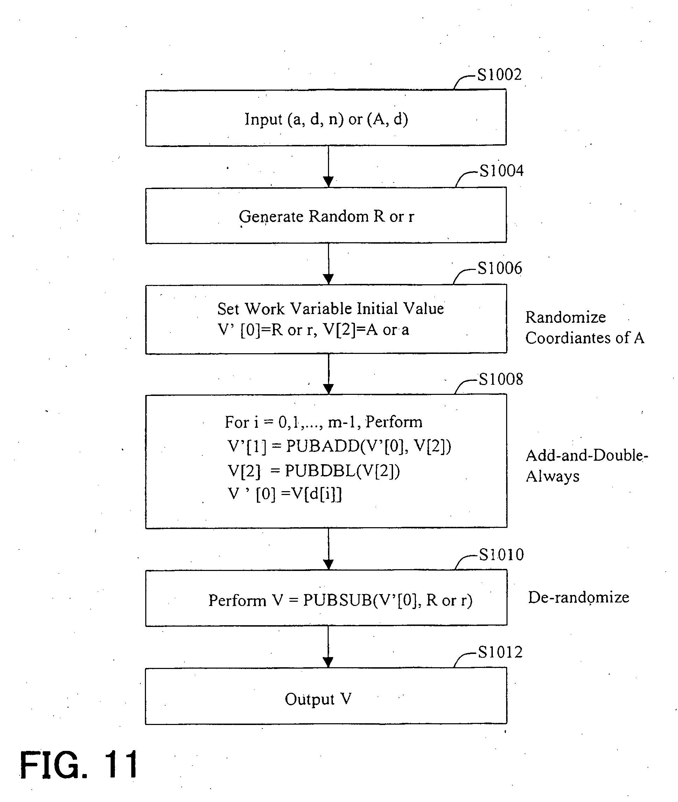

FIGURE 11 shows a basic algorithm for public key encryption processing provided with a countermeasure against the power analysis attack, in accordance with the invention, performed by the encryption device 10 of FIGURE 10. This algorithm is applicable to both of the elliptic curve encryption and the RSA encryption.

Similarly to the algorithms of FIGURES 8A-8C, the algorithm of FIGURE 11 includes the following three stages: (i) randomizing the data (Steps 1004-1006); (ii) performing the scalar multiplication using the Add-and-Double-Always (Step 1008); and (iii) de-randomizing the operated data and then providing the operation result as an output (Step 1010).

Referring to FIGURE 11, at Step 1002, the input unit 12 receives values a, d and n, or alternatively values A and d. At Step 1004, the random value generating unit 14 generates random data R or r, where R or r denotes the data of a random elliptic point on an elliptic curve in the elliptic curve encryption, or alternatively a random integer value in the RSA.

At Step 1006, the initializing unit 16 initializes the work variables to be used in the Add-and-Double-Always, such that V'[0] = R or r, and V[2] = A or a.

At Step 1008, the scalar multiplication processing unit 20 for an elliptic point performs the Add-and-Double-Always with the work variable V'[0], V'[1] and V[2]. Thus, for i = 0, 1,... , m-1, the operations of V'[1] = ECADD(V'[0], V[2]), V[2] - ECDBL(V[2]), and V'[0] = V'[d[i]] are repeatedly performed in the elliptic curve encryption, or alternatively the operations of V'[1] = V'[0] $\times$ V[2] (mod n), V[2] = V[2]$^2$ (mod n), and V'[0] = V'[d[i]]are repeatedly performed in the RSA encryption. Independently of the bit values of the private key d, a predetermined operation pattern of the Add-and-Double-Always is repeated, to thereby provide protection against the SPA. By providing V'[0] = R or r at Step 1004, the values of the work variables V'[0] and V'[1] are randomized to thereby prevent the DPA. The value of V[2] is not randomized. This is so because the DPA and the SPA using the value of V[2] are impossible in the Add-and-Double-Always, so that the randomization of V[2] is not required. The value of V[2] can be determined by repeating the doubling or the squaring of the value A, independently of the bit values of the private key d. Thus, the DPA cannot be achieved using this value.

At Step 1010, the random element canceling unit 22 de-randomizes the randomized data. For this purpose, for R generated at Step 1004, the operation of V = V'[0] - R is performed in the elliptic curve encryption, whereas the operation of V = V' [0] $\times$ $r^{-1}$ is performed in the RSA. At Step 1012, the output unit 24 provides the operation result V as an output.

In this way, the SPA and the DPA are prevented by the algorithm of FIGURE 11. The following describes that the RPA is prevented when the algorithm of FIGURE 11 is applied to the elliptic curve encryption.

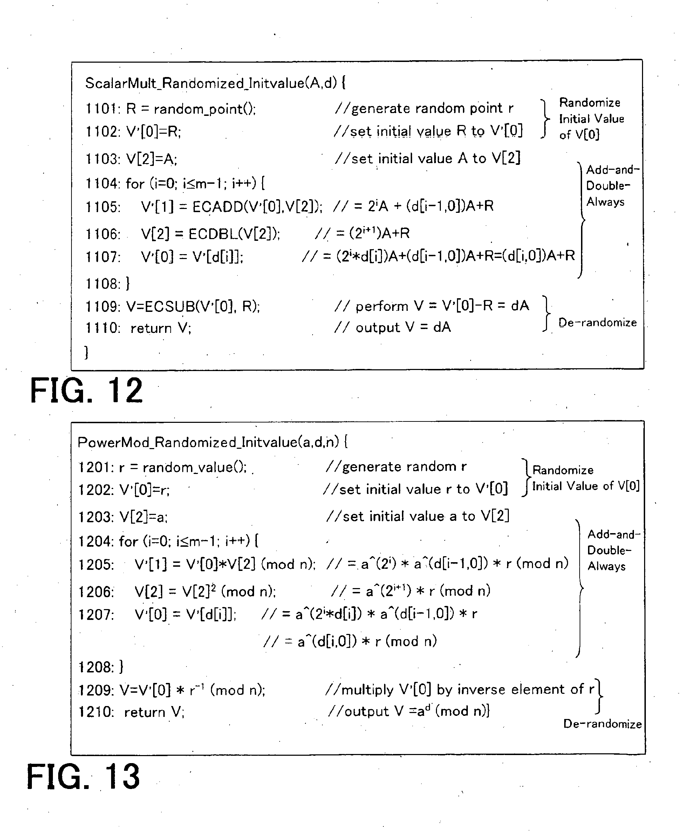

FIGURE 12 shows a basic algorithm performed by the encryption device 10 of FIGURE 10, in which a countermeasure against the power analysis attack in accordance with the invention is applied to the elliptic curve encryption.

Referring to FIGURE 12, at Step 1101, the random value generating unit 14 generates or selects a random elliptic point R on an elliptic curve. The initializing unit 16 at Step 1102 sets R as the initial value into the work variable V'[0], and then at Step 1103 sets A as the initial value into the work variable V[2].

The loop including Steps 1104-1108 performs the elliptic point scalar multiplication through the Add-and-Double-Always for the work variables V'[0], V'[1] and V[2]. Although this loop performs the same processing as the Add-and-Double-Always without a countermeasure against the RPA of Steps 303-307 of FIGURE 5, the random elliptic point R is set as the initial value of V'[0], to thereby provide protection against the RPA.

With these initial values, the relations between the work variables V'[0] and V'[1] of FIGURE 12, and the work variables V[0] and V[1] of FIGURE 5, are expressed by V'[0] = V[0] + R and V'[1] = V[1] + R, respectively. Thus, in contrast to the values of V[0] and V[1] of the work variables determined in FIGURE 5, the algorithm of FIGURE 12 determines V'[0] = V[0] + R and V'[1] = V[1] + R, where these values of the work variables vary at random depending on R. Thus, in contrast to the RPC and the RC, the coordinate data of V'[0] and V'[1] is prevented from becoming zero (0) independently of the random value R. Thus, the attacker cannot intentionally set the coordinate data values of the work variables to be zero (0), so that the RPA is prevented.

Upon completion of the loop of Steps 1104-1108, the output unit 24 at Step 1109 performs the operation of V = V'[0] - R to thereby de-randomize the data which has been randomized with R, and then provides the value V as an output.

In this way, the algorithm in accordance with the invention provides the encryption processing which is secure against the RPA. The algorithm of FIGURE 12 in accordance with the invention in comparison with the algorithm of FIGURE 5 without a countermeasure against the RPA, includes the generation of the elliptic point R at Step 1101 and the subtraction of the elliptic point R at Step 1109 which are the only added processing for the countermeasure against the RPA. Thus, the speed reduction involved in the countermeasure against the RPA is limited to that caused by the processing of these two steps or operations. This provides high speed processing in comparison with the ES and the PB that require twice the processing time of the algorithm of FIGURE 5.

FIGURE 13 shows a basic algorithm provided with a countermeasure against the power analysis attack in accordance with the invention in application to the RSA encryption, performed by the encryption device 10 of FIGURE 10.

Referring to FIGURE 13, at Step 1201, the random value generating unit 14 generates a random value **r**. The initializing unit 16 at Step 1202 sets R as the initial value into the work variable V'[0], and at Step 1203 sets **a** as the initial value into the work variable V[2].

The loop including Steps 1204-1208 performs modular exponentiation through the Add-and-Double-Always for the work variables V'[0], V'[1] and V[2], to thereby update these work variables.

Upon completion of the loop of Steps 1204-1208, the output unit 24 at Step 1209 performs the modular multiplication of V'[0] by the inverse element $r^{-1}$ (mod n) of r, to thereby de-randomize the data which has been randomized with r, and then provides the result V as an output.

The loop including Steps 1204-1208 for the Add-and-Double-Always prevents the SPA. Further, the random value r set as the initial value to the work variable V'[0] causes the work variables in the loop to vary at random, which prevents the DPA.

In comparison with the algorithm of FIGURE 5 applied to the RSA, the generation of r at Step 1201 and the modular multiplication by the inverse element of r at Step 1209 are the only added processing for the countermeasure against the RPA, as overhead for the processing.

Next, embodiments of the basic algorithm for elliptic curve encryption of FIGURE 12 are described below.

There are a plurality of embodiments for generating the elliptic point R at Step 1101 of FIGURE 12 and doubling V[2] at Step 1107. The embodiments have respective different required amounts of computation.

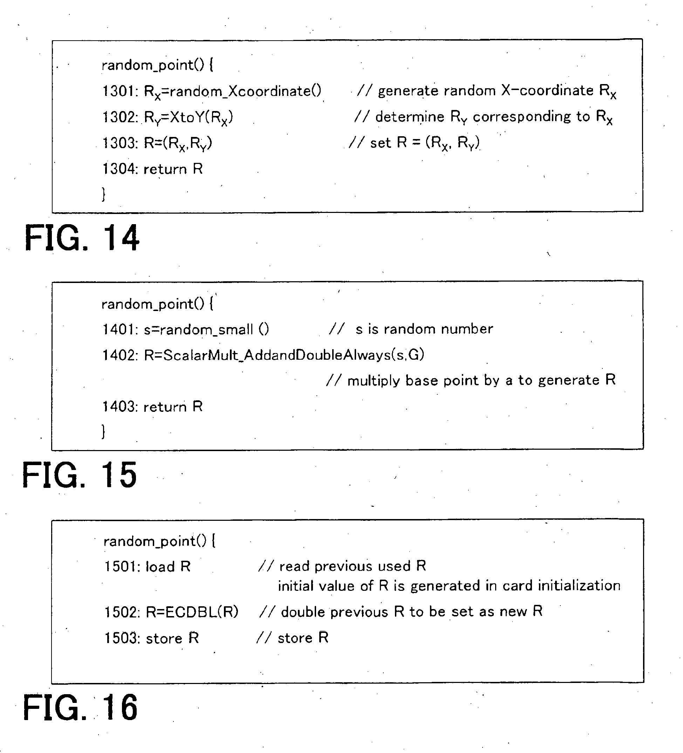

FIGURES 14 through 18 show respective different algorithms of generating the random elliptic point R at Step 1101 of FIGURE 12.

Referring to FIGURE 14, at Step 1301, the random value generating unit 14 generates a possible arbitrary value of the coordinate X at random, and then sets the value X into $R_X$. Thus, the elliptic curve encryption with the elliptic curve parameters over the prime field generates an integer satisfying $0 \leq R_X < p$, whereas the elliptic curve encryption with the elliptic curve parameters over the binary field generates a random value of $GF(2^m)$. At Step 1302, a coordinate Y corresponding to the given coordinate X is determined to thereby generate $R_Y$. At Steps 1303 and 1304, $R = (R_X, R_Y)$ is set. The algorithm of deriving the coordinate Y from the coordinate X is described in the IEEE P1363/D13 described above.

Referring to FIGURE 15, the generating unit 14 at Step 1401 generates a random value s, and at Step 1402 sets, into R, the sG derived by multiplying the base elliptic point G by s through the Add-and-Double-Always of FIGURE 5. Alternatively, in place of the algorithm of FIGURE 5, the algorithm of FIGURE 12 may be performed for R = O, d = s and A = G. Such shared use of the same algorithm improves the efficiency of utilization of the resources. The random value s is an arbitrary value. However, if this value has the bit length exceeding that of the scalar value d, then the computation overhead in the scalar multiplication at Step 1402 becomes large. In the elliptic curve encryption of 160 bits as an example, if s is a random value of 160 bits, then the amount of computation at Step 1402 becomes large. As a result, the amount of computation of the entire algorithm in accordance with the invention becomes approximately twice of that of the algorithm of FIGURE 5, so that the processing speed falls significantly. Thus, s is preferably a value of 20 to 30 bits.

FIGURE 16 shows an algorithm of updating or the value of the elliptic point R at each time of calling the encryption processing protected from the power analysis attack in accordance with the invention, which occurs after the initial value of an elliptic point R is given at random in the initialization or the like of a smart card. This updating is implemented in simple operation, whereby the processing time of this algorithm can be made shorter than that of the algorithms of FIGURES 14 and 15.

At Step 1501, the generating unit 14 reads a value of R used in the conventional countermeasure against the power analysis attack, from a specific area in the memory. Alternatively, the initial value of the elliptic point R may be provided in accordance with the method shown in FIGURES 14 and 15. At Step 1502, the generating unit 14 performs the doubling of the elliptic point R to thereby update the value of R. At Step 1503, the generating unit 14 stores the updated value of the elliptic point R for use in the next processing.

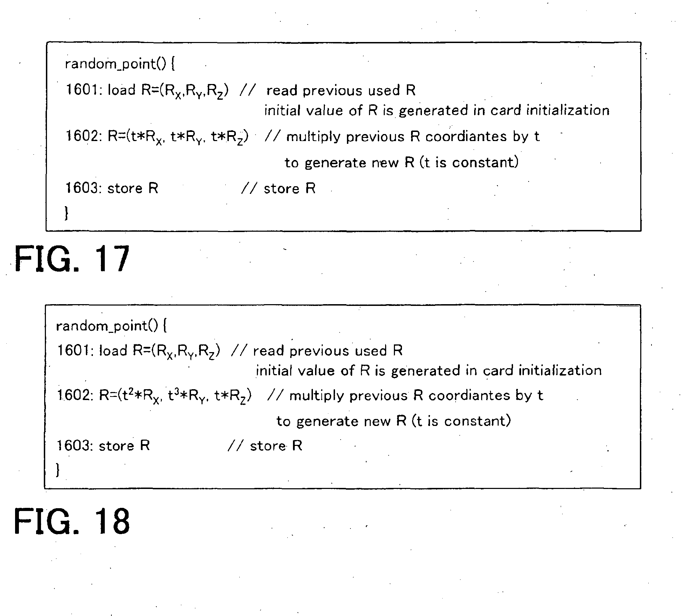

FIGURE 17 shows an algorithm of generating an elliptic point R shown in FIGURE 12 defined in the projective coordinate system. FIGURE 18 shows an algorithm of generating an elliptic point R shown in FIGURE 12 defined in the Jacobian coordinate system.

In these algorithms, similarly to the algorithm of FIGURE 16, the generating unit 14 generates the initial value of the elliptic point R at random in the initialization or the like of the smart card. After that, the generating unit 14 updates the initial value of the elliptic point R at each time of calling the encryption program in accordance with the invention.

Similarly to the algorithm of FIGURE 16, the generating unit 14 at Step 1601 reads the previous R stored in the memory 18, and at Step 1603 stores the updated R. In FIGURE 17, the generating unit 14 at Step 1602 multiplies the coordinate value $R = (R_X, R_Y, R_Z)$ by a constant t, to thereby update the initial or previous value R. In FIGURE 18, the generating unit 14 at Step 1602 multiplies the coordinate component values of $R = (R_X, R_Y, R_Z)$ by respective constants t, $t^2$ and $t^3$, to thereby update the initial or previous value R. The value of t is selected to be a small value, such as t = 3, to thereby reduce the amount of computation required for updating R.

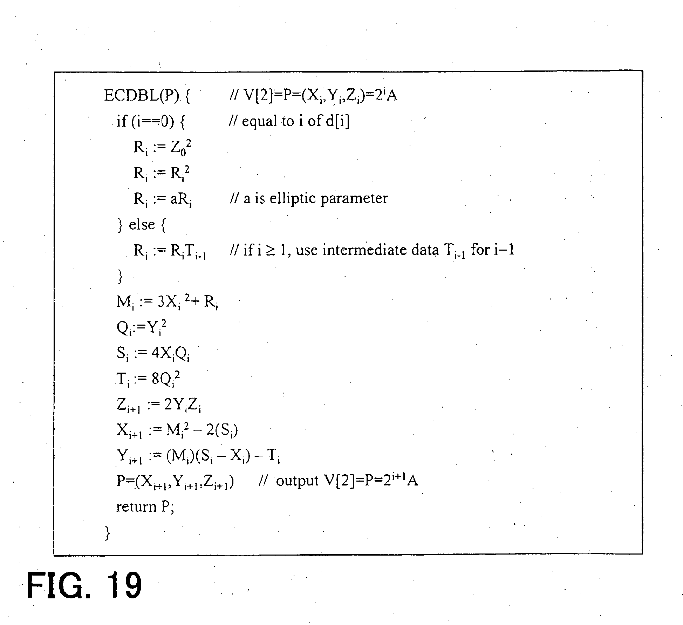

FIGURE 19 shows an embodiment of the elliptic point doubling performed on the work variable V[2] at Step 1107 of FIGURE 12.

The elliptic point doubling at Step 1107 is repeatedly performed on the same work variable V[2]. The value of V[2] is expressed by $V[2] = 2^{i+1}A$ using the loop variable i. The technique of accelerating the computation by repeatedly performing the doubling on the same point (elliptic point $2^k$-multiplication) in the Jacobian coordinate system and the prime field is disclosed in Japanese Patent Application Publication JP 2000-137436-A published on May, 16, 2000 and invented by Takenaka and Ito, two of the present inventors. In FIGURE 19, the technique of elliptic point $2^k$-multiplication shown in FIGURE 2 of the publication is employed.

The loop variable i in FIGURE 19 has the same value as the loop variable i of FIGURE 17. This algorithm represents the operation between the input of $A[2] = (X_i, Y_i, Z_i) = 2^i A$ as a variable P and the output of $A[2] = (X_{i+1}, Y_{i+1}, Z_{i+1}) = 2^{i+1}A$. For i = 0, the procedure branches away to a process for i = 0 using an if-clause, so that the same processing as the conventional doubling in the Jacobian coordinate system over the prime field is performed. For $i \geq 1$, the procedure branches away to a process for $i \geq 1$ using an if-clause. For this purpose, in determining the work variable $R_i$ for the elliptic point doubling, the value of the work variable $T_{i-1}$ for i - 1 is reused, which reduces the amount of computation. When the standard elliptic point doubling described in the document IEEE P1363 described above is used, ten times of multiplication is required for each processing. However, when the algorithm of FIGURE 19 is used, only eight times of multiplication is required for each processing. Thus, the algorithm of FIGURE 19 reduces, by twenty percent, the amount of computation required for the elliptic point doubling in the standard method.

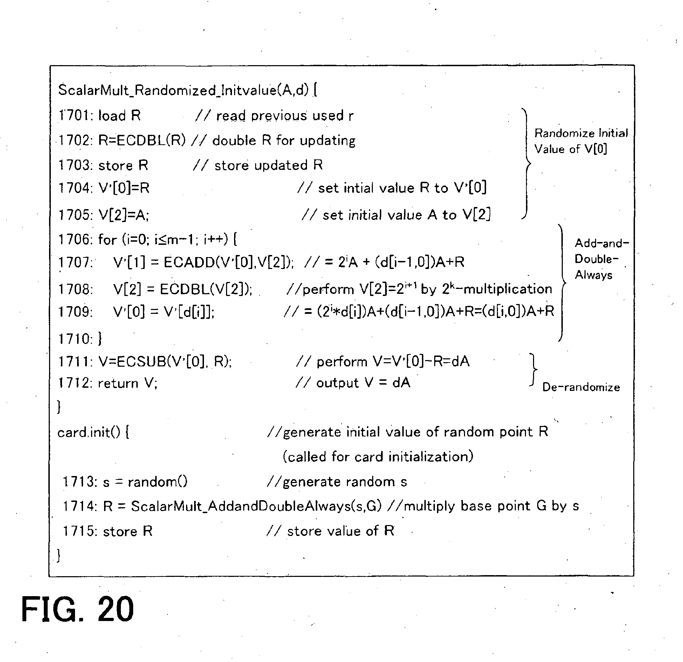

FIGURE 20 shows an embodiment of the basic algorithm in accordance with the invention shown in FIGURE 12, which is a combination of the algorithms of FIGURE 15 (the initialization of R), FIGURE 16 (the generation of R at Step 1101), and FIGURE 19 (the elliptic point $2^k$-multiplication at Step 1106).

Alternatively, Step 1101 of FIGURE 12 may be replaced by any corresponding one of FIGURES 14-18, while Step 1106 may be replaced by any corresponding one of FIGURE 19 and the above-mentioned document IEEE P1363, to thereby form a combination.

Next, an embodiment of the basic algorithm for the RSA encryption of FIGURE 13 is described below. FIGURE 18 per se serves as an embodiment for countermeasure against the power analysis attack to the RSA encryption. This is so because there is no modification of generating the random value r at Step 1201 and of squaring at Step 1206.

As described above, the embodiments of the invention provide countermeasures against all of the analyses of the SPA, the DPA and the RPA, and requires the smaller amount of computation than that of the ES and the PB which are known as generally secure systems.

Table 2 shows the comparison between the elliptic curve encryption in accordance with the invention and the conventional public key encryption for countermeasure against the power analysis attack. Table 3 shows the comparison between the RSA encryption in accordance with the invention and the conventional public key encryption for countermeasure against the power analysis attack. In Table 3, the RPC, RC and PB encryptions are not applicable to the elliptic curve encryption, and hence are not shown.

TABLE 2 COMPARISON OF COUNTERMEASURES AGAINST POWER ANALYSIS ATTACK FOR ELLIPTIC ENCRYPTION

|  | RPA | SPA | DPA | Processing Time |
|---|---|---|---|---|
| RPC (FIGS. 8A & 8B) | V | S | S | E + I |
| RC (FIG. 8C) | V | S | S | E + I |
| ES (FIG. 9A) | S | S | S | 2E + 1A |
| PB (FIG. 9B) | S | S | S | 2E + 3A |
| Invention (FIG.20) | S | S | S | E + 2A |

TABLE 3 COMPARISON OF COUNTERMEASURES AGAINST POWER ANALYSIS ATTACK FOR RSA

|  | SPA | DPA | Processing Time |
|---|---|---|---|
| ES (FIG. 9A) | S | S | 2E |
| Invention (FIG.13) | S | S | E + I |

In Tables 2 and 3, "S" indicates that the system is secure against the analysis, and "V" indicates that the system is vulnerable to the analysis. "E" indicates the processing time of scalar multiplication in the Add-and-Double-Always without a countermeasure against the power analysis attack. "I" indicates the processing time of determining the inverse elements. "A" indicates the processing time of elliptic point addition, elliptic point subtraction, and elliptic point doubling. However, A is smaller than E and hence is negligible.

The amount of processing in the conventional encryption is shown in TABLE 1. In the algorithm of FIGURE 20 in accordance with the invention, the same operation as the Add-and-Double-Always of FIGURE 5 is performed, except for the elliptic point doubling at Step 1702 and the elliptic point subtraction at Step 1711. Thus, the total amount of processing is expressed by E + 2A.

As can be seen from TABLE 2, the encryptions secure against all of the SPA, the DPA and the RPA are the ES encryption, the PB encryption and the encryption according to the invention. In comparison of the processing time, A is much smaller than E and negligible, and hence the processing time of the encryption of the invention is approximately half the processing time of the secure ES and PB encryptions.

A is much smaller than E and negligible, apparently because each of the elliptic point addition and doubling are performed m times in the Add-and-Double-Always, for a total of 2m times. For example, for m = 160 in the elliptic curve encryption of 160 bits, E = 320A.

The amount of computation required for the ES is 2E, because the computing procedure of the ES in the RSA is as follows:

$$v_1 = a^{d1} \ (\text{mod } n),$$

$v_2 = a^{d2}$ (mod n), and

$v = v_1 v_2$ (mod n) $= a^d$ (mod n),

where the modular multiplication of $v_1$ and $v_2$ is assumed to be much smaller than the modular exponentiation and negligible. The processing of FIGURE 13 in accordance with the invention is formed by the Add-and-Double-Always at Steps 1201-1208 and the operation of determining the inverse element $r^{-1}$ (mod n) at Steps 1209-1210, to thereby provide the amount of processing expressed by E + I in total. Thus, for E > I, the invention provides the processing at the higher speed than the ES. Although the relative magnitudes of E and I vary depending on the processing environment, generally E is proportional to the third power of the operation bit length, while I is proportional to the second power of the operation bit length. This verifies that the assumption of E > I is reasonable. Thus, the invention reduces the processing time without degrading the security against the power analysis attack.

**Claims**

1.  An encryption device (10) for performing elliptic encryption processing with a private key, comprising:

    a random value generating unit (14) for generating a random elliptic point R on an elliptic curve;
    an operation unit (20) for receiving a particular input elliptic point A on the elliptic curve, and performing a first operation of calculating the sum of the random elliptic point R and a scalar multiple of the particular input elliptic point A, $V_1 = R + dA$, through one scalar multiplication, in accordance with a bit sequence of a particular scalar value **d** for said elliptic encryption processing, where **d** is the private key and, in said scalar multiplication, a first work variable (V[0]) is initialized with the point R, and a second work variable (V[2]) is initialized with the point A;
    and said operation unit (20) is adapted to repeatedly, for each bit of the bit sequence of the particular scalar value **d**, the operations of:

    - elliptic point addition V[1] := V[0] + V[2],
    - elliptic point doubling V[2] := 2V[2], and
    - substitution V[0] := V[d[i]], wherein d[i] denotes a value of the i-th LSB of the m-bit scalar value **d** for i = 0, 1,... , m-1;

    a de-randomizing unit (22) for performing a second operation of subtracting the random elliptic point R from the sum $V_1$ determined by said first operation, $V = V_1 - R$;
    and
    a unit (24) for providing, as an output, the elliptic point V determined by said de-randomization unit.

2.  An encryption device (10) according to claim 1,
    wherein said randomizing unit (16) is adapted to generate a coordinate X of the elliptic point R on the elliptic curve, to generate a coordinate Y of the elliptic point R in accordance with the coordinate X, and to set, as the initial elliptic point V[0], the generated coordinates (X, Y) expressing the elliptic point R.

3.  An encryption device (10) according to claim 1,
    wherein said randomizing unit (16) is adapted to generate a random value **s**, to determine a base elliptic point G multiplied by **s**, and to set the determined sG as the elliptic point R into the initial elliptic point V[0].

4.  An encryption device (10) according to claim 3,
    wherein for the determination of the sG, said randomizing unit (16) is adapted to set the infinite elliptic point O as an initial value into the work variable V[0], to set the G as an initial value into the work variable V[2], and to perform repeatedly the operations of:

    - elliptic point addition V[1] := V[0] + V[2],
    - elliptic point doubling V[2] := 2V[2], and
    - substitution V [0] := V[s[i]],

    where the scalar value s is an m-bit sequence, and s[i] denotes a value of the i-th LSB of the scalar value **d** for i = 0, 1,... , m-1.

**5.** An encryption device (10) according to claim 1,
wherein the random value generating unit (14) is adapted to generate a first elliptic point $R_0$ on the elliptic curve at random and to set it as the elliptic point R, and to use thereafter an elliptic point $R_n$ on the elliptic curve expressed by a function $R_n = f(R_{n-1}, c)$ as the elliptic point R for n>=1, where $R_n$ denotes the initial elliptic point generated in the n-th time of the elliptic encryption processing for n = 0, 1, ..., and c indicates a constant.

**6.** An encryption device (10) according to claim 5,
wherein when a previous elliptic point $R_{n-1}$ on the elliptic curve is expressed by an elliptic point $(R_X, R_Y, R_Z)$ in projective coordinates, a current elliptic point $R_n$ on the elliptic curve is expressed by an elliptic point $(c \times R_X, c \times R_Y, c \times R_Z)$ in the projective coordinates.

**7.** An encryption device (10) according to claim 5, wherein when a previous elliptic point $R_{n-1}$ on the elliptic curve is expressed by an elliptic point $(R_X, R_Y, R_Z)$ in Jacobian coordinates, a present elliptic point $R_n$ on the elliptic curve is expressed by an elliptic point $(c^2 \times R_X, c^3 \times R_Y, c \times R_Z)$ in the Jacobian coordinates.

**8.** An encryption device (10) according to claim 1, wherein said elliptic encryption processing uses Jacobian coordinates for elliptic curve parameters over a prime field, and $P = V[2] = (X_i, Y_i, Z_i) = 2^i A$ is calculated via the following steps:

for i = 0, $R_i$ is determined by sequentially performing the operations of $R_i := Z_0^2$, $R_i = R_i^2$, and $R_i := aR_i$;
for $i \geq 1$, $R_i$ is determined by performing the operation of $R_i := R_i T_{i-1}$, where $T_{i-1}$ denotes intermediate data for i - 1; and
$P = (X_{i+1}, Y_{i+1}, Z_{1+1i}) = 2^{i+1} A$ is determined by performing, in accordance with the determined Ri, the operations of $M_i := 3X_i + R_i$, $Q_i := Y_i^2$, $S_i := 4X_i Q_i$, $T_i := 8Q_i^2$, $Z_{i+1} := 2Y_i Z_i$, $X_{i+1} := M_i^2 - 2S_i$, and $Y_{i+1} := M_i(S_i - X_i) - T_i$, in this order or in a different order, and then is outputted as V[2].

**9.** An encryption device (10) for performing modular exponentiation encryption processing with a private key, comprising:

a random value generating unit (14) for generating a random integer **r**;
an operation unit (20) for receiving a particular base **a**, and performing a first operation of modular exponentiation $V_1 = r \times a^d \pmod{n}$ for the random integer r and the particular input value a in accordance with a bit sequence of a particular private key **d** for said modular exponentiation encryption processing, where, in the said modular exponentiation, a first work variable (V[0]) is initialized with the integer r, and a second work variable (V[2]) is initialized with the value a;
and said operation unit (20) is adapted to perform repeatedly, for each bit of the bit sequence of the particular scalar value **d**, the operations of:

- multiplication $V[1] := V[0] \times V[2] \pmod{n}$
- squaring $V[2]^2 \pmod{n}$, and
- substitution $V[0] := V[d[i]]$, wherein d[i] denotes a value of the i-th LSB of the m-bit scalar value **d** for i = 0, 1,... , m-1; a de-randomizing unit (22) for performing a second operation of modular multiplication $V = V_1 \times r^{-1} \pmod{n}$ on the value $V_1$ determined by said first operation and an inverse element $r^{-1} \pmod{n}$ of r (mod n); and

a unit (24) for providing, as an output, the value V determined by said de-randomizing unit.

**10.** A method for use in an information processing device and for performing elliptic encryption processing with a private key, said method comprising the steps of:

generating a random elliptic point R on an elliptic curve
performing a first operation of calculating the sum of the random elliptic point R and a scalar multiple of a particular input elliptic point A on the elliptic curve, $V_1 = R + dA$, through one scalar multiplication, in accordance with a bit sequence of a particular scalar value **d** for said elliptic encryption processing, where **d** is the private key and, in said scalar multiplication, a first work variable (V[0]) is initialized with the point R, and a second work variable (V[2]) is initialized with the point A;
repeatedly performing, for each bit of the bit sequence of the particular scalar value **d**, the operations of:

- elliptic point addition V[1] :=V[0]+V[2],

- elliptic point doubling V[2] :=2V[2], and
- substitution V[0] := V[d[i]], wherein d[i] denotes a value of the i-th LSB of the m-bit scalar value **d** for i = 0, 1,... , m-1; performing a second operation of subtracting the random elliptic point R from the sum $V_1$ determined by said first operation, V = $V_1$ - R; and providing, as an output, the elliptic point V.

11. A method for use in an information processing device and for performing modular exponentiation encryption processing with a private key, said method comprising the steps of:

generating a random integer **r**;
performing a first operation of modular exponentiation $V_1$ = r × $a^d$ (mod n) for the random integer r and a particular input value **a** in accordance with a bit sequence of a particular private key **d** for said modular exponentiation encryption processing, where, in the said modular exponentiation, a first work variable (V[0]) is initialized with the integer r, and a second work variable (V[2]) is initialized with the value **a**;
repeatedly performing, for each bit of the bit sequence of the particular scalar value **d**, the operations of:

- multiplication V[1] := V[0] × V[2] (mod n)
- squaring V[2]$^2$ (mod n), and
- substitution V[0] := V[d[i]], wherein d[i] denotes a value of the i-th LSB of the m-bit scalar value **d** for i = 0, 1,... , m-1;

performing a second operation of modular multiplication V = $V_1$ × $r^{-1}$ (mod n) on the value $V_1$ determined by said first operation and an inverse element $r^{-1}$ (mod n) of r (mod n); and
providing, as an output, the value V.

12. A processor-executable program comprising program code means adapted to perform the method of claim 10, when said program is run on an information processing device.

13. A processor-executable program comprising program code means adapted to perform the method of claim 11, when said program is run on an information processing device.

## Patentansprüche

1. Verschlüsselungsvorrichtung (10) zur Durchführung einer elliptischen Verschlüsselungsverarbeitung mit einem privaten Schlüssel, umfassend:

eine Zufallswerterzeugungseinheit (14) zum Erzeugen eines elliptischen Zufallspunkts R auf einer elliptischen Kurve;
eine Betriebseinheit (20) zum Empfangen eines besonderen elliptischen Eingabepunkts A auf der elliptischen Kurve und zum Durchführen einer ersten Operation zur Berechnung der Summe des elliptischen Zufallspunkts R und eines skalaren Vielfachen des besonderen elliptischen Eingabepunkts A, $V_1$ = R + dA, durch eine skalare Multiplikation gemäß einer Bitsequenz eines besonderen skalaren Wertes d für die elliptische Verschlüsselungsverarbeitung, wobei d der private Schlüssel ist und in der skalaren Multiplikation eine erste Arbeitsvariable (V[0]) mit dem Punkt R initialisiert ist und eine zweite Arbeitsvariable (V[2]) mit dem Punkt A initialisiert ist;
und die Betriebseinheit (20) dazu ausgebildet ist, für jedes Bit der Bitsequenz des besonderen skalaren Wertes d folgende Operationen wiederholt durchzuführen:

- Addition des elliptischen Punkts V[1] : = V[0] + V[2],
- Verdopplung des elliptischen Punkts V[2]: = 2V[2]
und
- Substitution V[0] : = V[d[i]], wobei d[i] einen Wert des i. LSB des m-Bit skalaren Wertes d für i = 0, 1, ..., m-1 bezeichnet;

eine De-Randomisierungseinheit (22) zum Durchführen einer zweiten Operation zum Subtrahieren des elliptischen Zufallspunkts R von der Summe $V_1$, die durch die erste Operation bestimmt wird, V = $V_1$-R; und
eine Einheit (24) zum Bereitstellen des elliptischen Punktes V, der durch die De-Randomisierungseinheit bestimmt wird, als Ausgang.

**2.** Verschlüsselungsvorrichtung (10) nach Anspruch 1, wobei die Randomisierungseinheit (16) dazu ausgebildet ist, eine Koordinate X des elliptischen Punktes R auf der elliptischen Kurve zu erzeugen, eine Koordinate Y des elliptischen Punktes R entsprechend der Koordinate X zu erzeugen und die erzeugten Koordinaten (X, Y), die den elliptischen Punkt R angeben, als anfänglichen elliptischen Punkt V[0] einzustellen.

**3.** Verschlüsselungsvorrichtung (10) nach Anspruch 1, wobei die Randomisierungseinheit (16) dazu ausgebildet ist, einen Zufallswert s zu erzeugen, einen elliptischen Grundpunkt G multipliziert mit s zu bestimmen und den bestimmten sG als elliptischen Punkt R in den anfänglichen elliptischen Punkt V[0] zu stellen.

**4.** Verschlüsselungsvorrichtung (10) nach Anspruch 3, wobei zur Bestimmung des sG die Randomisierungseinheit (16) dazu ausgebildet ist, den unendlichen elliptischen Punkt O als Anfangswert in die Arbeitsvariable V[0] zu stellen, den G als Anfangswert in die Arbeitsvariable V[2] zu stellen und folgende Operationen wiederholt auszuführen:

- Addition des elliptischen Punkts V[1]: = V[0] + V[2],
- Verdopplung des elliptischen Punkts V[2]: = 2V[2]
und
- Substitution V[0]: = V[s[i]],
wobei der skalare Wert s eine m-Bit Sequenz ist und s[i] einen Wert des i. LSB des skalaren Wertes d für i = 0,1,..., m-1 bezeichnet.

**5.** Verschlüsselungsvorrichtung (10) nach Anspruch 1, wobei die Zufallswerterzeugungseinheit (14) zum Erzeugen eines zufälligen ersten elliptischen Punkts $R_0$ auf der elliptischen Kurve und zum Einstellen desselben als elliptischen Punkt R ausgebildet ist, sowie zum anschließenden Verwenden eines elliptischen Punktes $R_n$ auf der elliptischen Kurve, angegeben durch eine Funktion $R_n = f(R_{n-1}, c)$, als den elliptischen Punkt R für n >=1, wobei $R_n$ den anfänglichen elliptischen Punkt bezeichnet, der das n. Mal in der elliptischen Verschlüsselungsverarbeitung für n = 0, 1,... erzeugt wird, und c eine Konstante angibt.

**6.** Verschlüsselungsvorrichtung (10) nach Anspruch 5, wobei, wenn ein vorangehender elliptischer Punkt $R_{n-1}$ auf der elliptischen Kurve durch einen elliptischen Punkt $(R_x, R_y, R_z)$ in projektiven Koordinaten angegeben ist, ein aktueller elliptischer Punkt $R_n$ auf der elliptischen Kurve durch einen elliptischen Punkt $(c \times R_x, c \times R_y, c \times R_z)$ in den projektiven Koordinaten angegeben ist.

**7.** Verschlüsselungsvorrichtung (10) nach Anspruch 5, wobei, wenn ein vorangehender elliptischer Punkt $R_{n-1}$ auf der elliptischen Kurve durch einen elliptischen Punkt $(R_x, R_y, R_z)$ in Jacobi-Koordinaten angegeben ist, ein aktueller elliptischer Punkt $R_n$ auf der elliptischen Kurve durch einen elliptischen Punkt $(c^2 \times R_x, c^3 \times R_y, c \times R_z)$ in den Jacobi-Koordinaten angegeben ist.

**8.** Verschlüsselungsvorrichtung (10) nach Anspruch 5, wobei die elliptische Verschlüsselungsverarbeitung Jacobi-Koordinaten für elliptische Kurvenparameter über einem Primköper verwendet und $P = V[2] = (X_1, Y_1, Z_1) = 2^i A$ durch die folgenden Schritte berechnet wird:

für i = 0 wird $R_i$ durch aufeinander folgende Ausführung der Operationen $R_i := Z_0^2$, $R_i := R_1^2$ und $R_i = aR_i$ bestimmt; für $i \geq 1$ wird $R_i$ durch Ausführung der Operation $R_i := R_i T_{i-1}$ bestimmt, wobei $T_{i-1}$ Zwischendaten für i - 1 angibt; und $P = (X_{i+1}; Y_{i+1}; Z_{+1}) = 2^{i+1} A$ wird durch Ausführung, entsprechend dem bestimmten Ri, der Operationen $M_i := 3X + R_i$, $Q_i := Y_i^2$, $S_i := 4X_i Q_i$, $T_i := 8Q_i^2$, $Z_{i+1} := 2Y_i Z_i$, $X_{i+1} := M_i^2 - 2S_i$ und $Y_{i+1} := M_i (S_i - X_i) - T_i$ in dieser Reihenfolge oder in einer anderen Reihenfolge bestimmt und dann als V[2] ausgegeben.

**9.** Verschlüsselungsvorrichtung (10) zur Durchführung einer modularen Exponentiationsverschlüsselungsverarbeitung mit einem privaten Schlüssel, umfassend:

eine Zufallswerterzeugungseinheit (14) zum Erzeugen einer zufälligen ganzen Zahl r; eine Betriebseinheit (20) zum Empfangen einer besonderen Basis a und zum Durchführen einer ersten Operation einer modularen Exponentiation $V_1 = r \times a^d \pmod{n}$ für die zufällige ganze Zahl r und den besonderen Eingabewert a gemäß einer Bitsequenz eines besonderen privaten Schlüssels d für die modulare Exponentiationsverschlüsselungsverarbeitung, wobei in der modularen Exponentiation eine erste Arbeitsvariable (V[0]) mit der ganzen Zahl r initialisiert ist und eine zweite Arbeitsvariable (V[2]) mit dem Wert a initialisiert ist; und die Betriebseinheit (20) dazu ausgebildet ist, für jedes Bit der Bitsequenz des besonderen skalaren Wertes d folgende Operationen wiederholt auszuführen:

- Multiplikation V[1]: = V[0] x V[2] (mod n)
- Quadrieren $V[2]^2$ (mod n) und
- Substitution V[0]: = V[d[i]], wobei d[i] einen Wert des i. LSB des m-Bit skalaren Wertes d für i = 0, 1,..., m-1 bezeichnet;

eine De-Randomisierungseinheit (22) zur Durchführung einer zweiten Operation einer modularen Multiplikation $V = V_1$ x $r^{-1}$ (mod n) an dem Wert $V_1$, der durch die erste Operation bestimmt wurde, und einem inversen Element $r^{-1}$ von r (mod n); und

eine Einheit (24) zum Bereitstellen des Wertes V, der von der De-Randomisierungseinheit bestimmt wurde, als Ausgang.

10. Verfahren zur Verwendung in einer Informationsverarbeitungsvorrichtung und zur Durchführung einer elliptischen Verschlüsselungsverarbeitung mit einem privaten Schlüssel, wobei das Verfahren folgende Schritte umfasst:

Erzeugen eines elliptischen Zufallspunkts R auf einer elliptischen Kurve;
Durchführen einer ersten Operation zur Berechnung der Summe des elliptischen Zufallspunkts R und eines skalaren Vielfachen eines besonderen elliptischen Eingabepunkts A auf der elliptischen Kurve, $V_1 = R + dA$, durch eine skalare Multiplikation gemäß einer Bitsequenz eines besonderen skalaren Wertes d für die elliptische Verschlüsselungsverarbeitung, wobei d der private Schlüssel ist und in der skalaren Multiplikation eine erste Arbeitsvariable (V[0]) mit dem Punkt R initialisiert ist und eine zweite Arbeitsvariable (V[2]) mit dem Punkt A initialisiert ist;
wiederholtes Durchführen für jedes Bit der Bitsequenz des besonderen skalaren Wertes d der folgenden:

- Addition des elliptischen Punkts V[1]: = V[0] + V[2],
- Verdopplung des elliptischen Punkts V[2]: = 2V[2]
und
- Substitution V[0]: = V[d[i]], wobei d[i] einen Wert des i. LSB des m-Bit skalaren Wertes d für i = 0, 1,..., m-1 bezeichnet;

Durchführen einer zweiten Operation zum Subtrahieren des elliptischen Zufallspunkts R von der Summe $V_1$, die durch die erste Operation bestimmt wird, $V = V_1$-R; und
Bereitstellen des elliptischen Punktes V.

11. Verfahren zur Verwendung in einer Informationsverarbeitungsvorrichtung und zur Durchführung einer modularen Exponentiationsverschlüsselungsverarbeitung mit einem privaten Schlüssel, wobei das Verfahren folgende Schritte umfasst:

Erzeugen einer zufälligen ganzen Zahl r;
Durchführen einer ersten Operation einer modularen Exponentation $V_1 = r$ x $a^d$ (mod n) für die zufällige ganze Zahl r und einen besonderen Eingabewert a gemäß einer Bitsequenz eines besonderen privaten Schlüssels d für die modulare Exponentiationsverschlüsselungsverarbeitung, wobei in der modularen Exponentiation eine erste Arbeitsvariable (V[0]) mit der ganzen Zahl r initialisiert ist und eine zweite Arbeitsvariable (V[2]) mit dem Wert a initialisiert ist;
wiederholtes Durchführen für jedes Bit der Bitsequenz des besonderen skalaren Wertes d der folgenden Operationen:

- Multiplikation V[1]: = V[0] x V[2] (mod n)
- Quadrieren $V[2]^2$ (mod n) und
- Substitution V[0]: = V[d[i]], wobei d[i] einen Wert des i. LSB des m-Bit skalaren Wertes d für i = 0, 1,..., m-1 bezeichnet;

Durchführen einer zweiten Operation einer modularen Multiplikation $V = V_1$ x $r^{-1}$ (mod n) an dem Wert $V_1$, der durch die erste Operation bestimmt wurde, und einem inversen Element $r^{-1}$ von r (mod n) ; und Bereitstellen des Wertes V.

12. Programm, das von einem Prozessor ausführbar ist, umfassend Programmcodemittel, die zum Durchführen des Verfahrens nach Anspruch 10 ausgebildet sind, wenn das Programm auf einer Informationsverarbeitungsvorrichtung läuft.

13. Programm, das von einem Prozessor ausführbar ist, umfassend Programmcodemittel, die zum Durchführen des Verfahrens nach Anspruch 11 ausgebildet sind, wenn das Programm auf einer Informationsverarbeitungsvorrichtung läuft.

**Revendications**

1. Dispositif de chiffrement (10) destiné à mettre en oeuvre un traitement de chiffrement elliptique au moyen d'une clé privée, comprenant :

   une unité de génération de valeurs aléatoires (14) destinée à générer un point elliptique aléatoire R sur une courbe elliptique ;
   une unité d'opération (20) destinée à recevoir un point elliptique d'entrée spécifique A sur la courbe elliptique, et à mettre en oeuvre une première opération consistant à calculer la somme du point elliptique aléatoire R et d'un multiple scalaire du point elliptique d'entrée spécifique A, $V_1 = R + dA$, à travers une multiplication scalaire, selon une séquence de bits d'une valeur scalaire spécifique **d** pour ledit traitement de chiffrement elliptique, où d est une clé privée et, où dans ladite multiplication scalaire, une première variable de travail (V [0]) est initialisée avec le point R, et une seconde variable de travail (V [2]) est initialisée avec le point A ; et
   ladite unité d'opération (20) est apte à mettre en oeuvre de façon répétée, pour chaque bit de la séquence de bits de la valeur scalaire spécifique **d**, les opérations ci-dessous :

   - une addition de points elliptiques V[1]:=V[0]+V[2];
   - un doublement de points elliptiques V [2]:= 2V [2] ; et
   - une substitution V[0] := V[d[i]], dans laquelle **d** [i] désigne une valeur du i-ième bit de poids faible, LSB, de la valeur scalaire de m bits **d** pour i = 0, 1, ..., m-1 ;

   une unité de dé-randomisation (22) destinée à mettre en oeuvre une seconde opération consistant à soustraire le point elliptique aléatoire R de la somme $V_1$ déterminée par ladite première opération, $V = V_1 - R$ ; et
   une unité (24) destinée à fournir, en tant que sortie, le point elliptique V déterminé par ladite unité de dé-randomisation.

2. Dispositif de chiffrement (10) selon la revendication 1, dans lequel ladite unité de randomisation (16) est apte à générer une coordonnée X du point elliptique R sur la courbe elliptique, à générer une coordonnée Y du point elliptique R selon la coordonnée X, et à définir, en tant que le point elliptique initial V [0], les coordonnées générées (X, Y) exprimant le point elliptique R.

3. Dispositif de chiffrement (10) selon la revendication 1, dans lequel ladite unité de randomisation (16) est apte à générer une valeur aléatoire **s**, à déterminer un point elliptique de base G multiplié par la valeur **s**, et à définir le produit sG déterminé en tant que le point elliptique R dans le point elliptique initial V [0].

4. Dispositif de chiffrement (10) selon la revendication 3, dans lequel, pour la détermination du produit sG, ladite unité de randomisation (16) est apte à définir le point elliptique infini O en tant qu'une valeur initiale dans la variable de travail V [0], à définir le point elliptique de base G en tant qu'une valeur initiale dans la variable de travail V [2], et à mettre en oeuvre de façon répétée les opérations ci-dessous :

   - une addition de points elliptiques V[1]:=V[0]+V[2];
   - un doublement de points elliptiques V[2] := 2V[2] ; et
   - une substitution V[0]:=V[s[1]];
   où la valeur scalaire **s** est une séquence de m bits, et s [i] désigne une valeur du i-ième bit de poids faible, LSB, de la valeur scalaire **d** pour i = 0, 1,..., m-1.

5. Dispositif de chiffrement (10) selon la revendication 1, dans lequel l'unité de génération de valeurs aléatoires (14) est apte à générer un premier point elliptique $R_0$ sur la courbe elliptique, de manière aléatoire, et à le définir en tant que le point elliptique R, et à utiliser ensuite un point elliptique $R_n$ sur la courbe elliptique, exprimé par une fonction $R_n = f (R_{n-1}, c)$ en tant que le point elliptique R pour n >= 1, où $R_n$ désigne le point elliptique initial généré au n-ième instant du traitement de chiffrement elliptique pour n = 0, 1,..., et c indique une constante.

**6.** Dispositif de chiffrement (10) selon la revendication 5, dans lequel, lorsqu'un point elliptique précédent $R_{n-1}$ sur la courbe elliptique est exprimé par un point elliptique $(R_x, R_y, R_z)$ dans des coordonnées projectives, un point elliptique en cours $R_n$ sur la courbe elliptique est exprimé par un point elliptique $(c \times R_x, c \times R_y, c \times R_z)$ dans les coordonnées projectives.

**7.** Dispositif de chiffrement (10) selon la revendication 5, dans lequel, lorsqu'un point elliptique précédent $R_{n-1}$ sur la courbe elliptique est exprimé par un point elliptique $(R_x, R_y, R_z)$ dans des coordonnées jacobiennes, un point elliptique présent $R_n$ sur la courbe elliptique est exprimé par un point elliptique $(c^2 \times R_x, c^3 \times R_y, c \times R_z)$ dans les coordonnées jacobiennes.

**8.** Dispositif de chiffrement (10) selon la revendication 1, dans lequel ledit traitement de chiffrement elliptique utilise des coordonnées jacobiennes pour des paramètres de courbe elliptique sur un champ premier, et l'opération $P = V[2] = (X_i, Y_i, Z_i) = 2^i A$ est calculée par l'intermédiaire des étapes ci-dessous :

pour $i = 0$, le point $R_i$ est déterminé en mettant en oeuvre séquentiellement les opérations de $R_i := Z_0^2$, $R_i := R_i^2$, et $R_i := aR_i$;
pour $i \geq 1$, le point $R_i$ est déterminé en mettant en oeuvre l'opération de $R_i := R_i T_{i-1}$, où $T_{i-1}$ désigne des données intermédiaires pour $i - 1$ ; et
la valeur $P = (X_{i+1}, Y_{i+1}, 2_{i+1}) = 2^{i+1} A$ est déterminée en mettant en oeuvre, selon le point $R_i$ déterminé, les opérations de $M_i := 3X_i + R_i$, $Q_i := Y_i^2$, $S_i := 4X_iQ_i$, $T_i := 8Q_i^2$, $Z_{1+1} := 2Y_iZ_i$, $X_{i+1} := M_i^2 - 2S_i$, et $Y_{i+1} := M_i (S_i - X_i) - T_i$, dans cet ordre, ou dans un ordre différent, et est ensuite générée en sortie en tant que $V[2]$.

**9.** Dispositif de chiffrement (10) destiné à mettre en oeuvre un traitement de chiffrement par exponentiation modulaire au moyen d'une clé privée, comprenant :

une unité de génération de valeurs aléatoires (14) destinée à générer un nombre entier aléatoire **r** ;
une unité d'opération (20) destinée à recevoir une base spécifique **a**, et à mettre en oeuvre une première opération d'exponentiation modulaire $V_1 = r \times a^d$ (modulo n) pour le nombre entier aléatoire r et la valeur d'entrée spécifique **a** selon une séquence de bits d'une clé privée spécifique **d** pour ledit traitement de chiffrement par exponentiation modulaire, où, dans ladite exponentiation modulaire, une première variable de travail $(V[0])$ est initialisée avec le nombre entier r, et une seconde variable de travail $(V[2])$ est initialisée avec la valeur a ; et ladite unité d'opération (20) est apte à mettre en oeuvre de façon répétée, pour chaque bit de la séquence de bits de la valeur scalaire spécifique **d**, les opérations ci-dessous :

- une multiplication $V[1] := V[0] \times V[2]$ (modulo n) ;
- une élévation au carré $V[2]^2$ (modulo n) ; et
- une substitution $V[0] := V[d[i]]$, où $d[i]$ désigne une valeur du i-ième bit de poids faible, LSB, de la valeur scalaire de m bits **d** pour $i = 0, 1, ..., m-1$ ; une unité de dé-randomisation (22) destinée à mettre en oeuvre une seconde opération de multiplication modulaire $V = V_1 \times r^{-1}$ (modulo n) sur la valeur $V_1$ déterminée par ladite première opération et un élément inverse $r^{-1}$ (modulo n) de r (modulo n) ; et une unité (24) destinée à fournir, en tant que sortie, la valeur V déterminée par ladite unité de dé-randomisation.

**10.** Procédé destiné à être utilisé dans un dispositif de traitement d'informations et destiné à mettre en oeuvre un traitement de chiffrement elliptique au moyen d'une clé privée, ledit procédé comprenant les étapes ci-dessous consistant à :

générer un point elliptique aléatoire R sur une courbe elliptique ;
mettre en oeuvre une première opération consistant à calculer la somme du point elliptique aléatoire R et d'un multiple scalaire d'un point elliptique d'entrée spécifique A sur la courbe elliptique, $V_1 = R + dA$, à travers une multiplication scalaire, selon une séquence de bits d'une valeur scalaire spécifique **d** pour ledit traitement de chiffrement elliptique, où **d** est une clé privée et, où dans ladite multiplication scalaire, une première variable de travail $(V[0])$ est initialisée avec le point R, et une seconde variable de travail $(V[2])$ est initialisée avec le point A ;
mettre en oeuvre de façon répétée, pour chaque bit de la séquence de bits de la valeur scalaire spécifique **d**, les opérations ci-dessous :

- une addition de points elliptiques $V[1] := V[0] + V[2]$ ;
- un doublement de points elliptiques $V[2] := 2V[2]$ ; et

- une substitution V[ 0 ] := V [ d [ i ] ], dans laquelle d [ i ] désigne une valeur du i-ième bit de poids faible, LSB, de la valeur scalaire de m bits **d** pour i = 0, 1, ..., m-1 ; mettre en oeuvre une seconde opération consistant à soustraire le point elliptique aléatoire R de la somme $V_1$ déterminée par ladite première opération, $V = V_1 - R$ ; et

fournir, en tant que sortie, le point elliptique V.

**11.** Procédé destiné à être utilisé dans un dispositif de traitement d'informations et destiné à mettre en oeuvre un traitement de chiffrement par exponentiation modulaire au moyen d'une clé privée, ledit procédé comprenant les étapes ci-dessous consistant à :

générer un nombre entier aléatoire **r** ;
mettre en oeuvre une première opération d'exponentiation modulaire $V_1 = r \times a^d$ (modulo n) pour le nombre entier aléatoire r et une valeur d'entrée spécifique **a** selon une séquence de bits d'une clé privée spécifique **d** pour ledit traitement de chiffrement par exponentiation modulaire, où, dans ladite exponentiation modulaire, une première variable de travail (V [ 0 ]) est initialisée avec le nombre entier r, et une seconde variable de travail (V [ 2 ]) est initialisée avec la valeur **a** ;
mettre en oeuvre de façon répétée, pour chaque bit de la séquence de bits de la valeur scalaire spécifique **d**, les opérations ci-dessous :

- une multiplication V [ 1 ] := V [ 0 ] x V [ 2 ] (modulo n) ;
- une élévation au carré V [ 2 ]² (modulo n) ; et
- une substitution V [ 0 ] := V [ d [ i ] ], où d [ i ] désigne une valeur du i-ième bit de poids faible, LSB, de la valeur scalaire de m bits **d** pour i = 0, 1, ..., m-1 ;

mettre en oeuvre une seconde opération de multiplication modulaire $V = V_1 \times r^{-1}$ (modulo n) sur la valeur $V_1$ déterminée par ladite première opération et un élément inverse $r^{-1}$ (modulo n) de r (modulo n) ; et
fournir, en tant que sortie, la valeur V.

**12.** Programme exécutable par processeur comprenant un moyen de code de programme apte à mettre en oeuvre le procédé selon la revendication 10, lorsque ledit programme est exécuté sur un dispositif de traitement d'informations.

**13.** Programme exécutable par processeur comprenant un moyen de code de programme apte à mettre en oeuvre le procédé selon la revendication 11, lorsque ledit programme est exécuté sur un dispositif de traitement d'informations.

SPA, PDA, or RPA
of Measured Data

Oscilloscope

Encryption Device

Secret Key

Plaintext/Ciphertext

Encryption/
Decryption
Unit

Ciphertext/Plaintext

# FIG. 1

```
PowerMod_Bin(a,d,n) {
101:  /* d[i] is i-th bit value of d, i = 0,1,...,m-1 */
102:  t = a; v = 1;
103:  for (i=0; i ≤ m-1; i++) {
104:    if (d[i] == 1) v = v*t (mod n)  // =a^(2^i*d[i])*a^(d[i-1,0])= a^d[i,0] (mod n)
105:    t = t² (mod n)                  // = a^(2^(i+1)) (mod n)
106:  }
107:  return v;                          // = a^d
}
```

# FIG. 2

```
ScalarMult_Bin(A,d) {
201:  /* d[i] is i-th bit value of d, i = 0,1,...,m-1 */
202:  T = A; V = O; // initial value of V is infinite point
203:  for (i=0; i ≤ m-1; i++) {
204:    if (d[i] == 1) V = ECADD(V,T) // = (2^i*d[i])A + (d[i-1,0])A= d[i,0]A
205:    T = ECDBL(T)                   // = (2^(i+1)) A
206:  }
207:  return V;                         // = dA
}
```

# FIG. 3

C(t)    Example of Power Waveform in SPA

D: ECDBL  A: ECADD

# FIG. 4

```
ScalarMult_AddandDoubleAlways(A,d) {
301:  /* d[i] is an i-th bit value of d, i=0,1,...,m-1 */
302:  V[0]=O; V[2]=A;
303:  for (i=0; i≤m-1; i++) {
304:    V[1] = ECADD(V[0],V[2])    // = 2^i V + (d[i-1,0])V
305:    V[2] = ECDBL(V[2])         // = (2^{i+1})V  (mod n)
306:    V[0] = V[d[i]]             // = (2^i*d[i])V + (d[i-1,0])V = (d[i,0])V
307:  }
308:  return V[0];                 // = dA
}
```

# FIG. 5

FIG. 6A

FIG. 6B

When Guess of d[h]
is Correct

FIG. 7A

When Guess of d[h]
is Incorrect

FIG. 7B

```
ScalarMult_RPC_Projective(A,d) {     //A has projective coordinates          Radomize
401: r = random number();            // generate random r                    Coordinates
                                                                             of A
402: A'=(r * A_X, r * A_Y, r * A_Z); // randomize A with r to be set as A'

403: V'[0]=O; V'[2]=A';
404: for (i=0; i ≤ m-1; i++) {                                                Add-and-
                                                                             Double-
405:   V'[1] = ECADD(V'[0],V'[2]); // = 2^i A' + (d[i-1,0])A'                 Always
406:   V'[2] = ECDBL(V'[2]);        // = (2^{i+1})A'
407:   V'[0] = V'[d[i]];            // = (2^i*d[i])A' + (d[i-1,0])A' = (d[i,0])A'
408: }
409: V=(V'[0]_X/V'[0]_Z, V'[0]_Y/V'[0]_Z); // transform V'[0] into affine coordinates
410: return V;                      // output V = dA
}                                                                            De-randomize
```

# FIG. 8A

```
ScalarMult_RPC_Jacboian (A,d) {     //A has Jacobian coordinates
501: r = random number();           // generate random r                     Radomize
                                                                            Coordinates
502: A'=(r^2*A_X, r^3*A_Y, r*A_Z);  // randomize A with r to be set as A'    of A
503: V'[0]=O; V'[2]=A';
504: for (i=0; i ≤m-1; i++) {                                                Add-and-
                                                                            Double-
505:   V'[1] = ECADD(V'[0],V'[2]);  // = 2^i A' + (d[i-1,0])A'               Always
506:   V'[2] = ECDBL(V'[2]);        // = (2^{i+1})A'
507:   V'[0] = V'[d[i]];            // = (2^i*d[i])A' + (d[i-1,0])A' = (d[i,0])A'
508: }
509: V=(V'[0]_X/(V'[0]_Z)^2, V'[0]_Y/(V'[0]_Z)^3); //transform V'[0] into affine coordinates
510: return V;                      //output V = dA
}                                                                            De-randomize
```

# FIG. 8B

24

```
ScalarMult_RC(A,d) {        //A has affine coordinates
601: r = random number();       // generate random r                          ⎤  Radomize
602: A'=(r²*Ax, r³*Ay);         // randomize A with r to be set as A'  ⎦  Coordinates
                                                                                  of A
603: V'[0]=O; V'[2]=A';                                                        ⎤  Add-and-
604: for (i=0; i ≤ m-1; i++) {                                                 │  Double-
605:    V'[1] = ECADD(V'[0],V'[2]); // = 2ⁱA' + (d[i-1,0])A'                   │  Always
606:    V'[2] = ECDBL(V'[2]);         // = (2^{i+1})A'                         ⎬
607:    V'[0] = V'[d[i]];              // = (2ⁱ*d[i])A' + (d[i-1,0])A' = (d[i,0])A'  ⎦
608: }
609: V=(V'[0]x/r², V'[0]y/r³);       //cancel random element in V'[0] to produce V ⎤
610: return V;                        // output V = dA                             ⎦
}                                                                              De-randomize
```

# FIG. 8C

```
ScalarMult_ES(A,d) {

701: r = random number();  // generate random r          ⎫ Radomize
                                                          ⎬ Coordinates
702: d₁=r; d₂=d-r;  //from r, derive random d₁,d₂ satisfying d=d₁+d₂   ⎭ of A


703: V₁= ScalarMult_AddandDoubleAlways(A,d₁) // perform V₁ = d₁A   ⎫ Add-and-
                                                                   ⎬ Double-
704: V₂= ScalarMult_AddandDoubleAlways(A,d₂) // perform V₂ = d₂A   ⎭ Always


705: V = ECADD(V₁, V₂)        // V = V₁+V₂ = dA+(d-r)A = dA   ⎫
                                                             ⎬ De-randomize
706: return V;               // output V = dA                ⎭

}
```

# FIG. 9A

```
ScalarMult_PB(A,d) {
                                                              ⎫ Radomize
801: R = random_point();      // generate random R on elliptic curve  ⎬ Coordinates
                                                              ⎭ of A
802: A₁= ECSUB(A,R); A₂=ECADD(A,R);

          //from R, derive random points A₁,A₂ satisfying A=A₁+A₂


803: V₁= ScalarMult_AddandDoubleAlways(A₁, d)  // perform V₁ = dA₁  ⎫ Add-and-
                                                                   ⎬ Double-
804: V₂= ScalarMult_AddandDoubleAlways(A₂, d)  // perform V₂ = dA₂  ⎭ Always


805: V = ECADD(V₁, V₂)         // V = V₁+V₂ = d(A₁+A₂) = dA  ⎫
                                                            ⎬ De-randomize
806: return V;                 // output V = dA              ⎭

}
```

# FIG. 9B

ENCRYPTION
PROCESSING
DEVICE
10

Point A (or Integer a, mod n),
Private Key d   Input Unit
12

Random Point R (or Random r),
Point A (or Integer a)

Random Point R
(or Random r)
Generating Unit
14

Work Variable
Initializing Unit
V'[0] := R (or r),
V[2] = A (or a)   16

Work Variable Area

V'[0] : ********
V'[1] : ********
V[2] : ********

18

Processor
32

Elliptic Point Scalar
Multiplication or
Modular Exponentiation
Processing Unit   20

PUBADD,
PUBDBL

Program Memory
34

V'[0]

Random Element R (or r)
Canceling Unit
V := PUBSUB(V'[0], R (or r))
22

Operation Result
Output Unit
V = dA (or a$^d$ (mod n))
24

# FIG. 10

S1002

Input (a, d, n) or (A, d)

S1004

Generate Random R or r

S1006

Set Work Variable Initial Value
V' [0]=R or r, V[2]=A or a

Randomize
Coordiantes of A

S1008

For i = 0,1,..., m-1, Perform
V'[1] = PUBADD(V'[0], V[2])
V[2] = PUBDBL(V[2])
V ' [0] =V[d[i]]

Add-and-Double-
Always

S1010

Perform V = PUBSUB(V'[0], R or r)

De-randomize

S1012

Output V

# FIG. 11

```
ScalarMult_Randomized_Initvalue(A,d) {
1101: R = random_point();          //generate random point r      ⎫ Randomize
1102: V'[0]=R;                     //set initial value R to V'[0]  ⎬ Initial Value
                                                                  ⎭ of V[0]
1103: V[2]=A;                      //set initial value A to V[2]
                                                                           ⎫ Add-and-
1104: for (i=0; i≤m−1; i++) {                                               ⎪ Double-
1105:    V'[1] = ECADD(V'[0],V[2]); // = 2ⁱA + (d[i−1,0])A+R               ⎪ Always
                                                                           ⎪
1106:    V[2] = ECDBL(V[2]);       // = (2^(i+1))A+R                       ⎬
1107:    V'[0] = V'[d[i]];         // = (2ⁱ*d[i])A+(d[i−1,0])A+R=(d[i,0])A+R ⎪
                                                                           ⎪
1108: }                                                                    ⎭
1109: V=ECSUB(V'[0], R);           // perform V = V'[0]−R = dA   ⎫
1110:  return V;                   // output V = dA              ⎬ De-randomize
                                                                ⎭
}
```

# FIG. 12

```
PowerMod_Randomized_Initvalue(a,d,n) {
1201: r = random_value();          //generate random r          ⎫ Randomize
1202: V'[0]=r;                     //set initial value r to V'[0] ⎬ Initial Value of V[0]
                                                                 ⎭
1203: V[2]=a;                      //set initial value a to V[2]
                                                                          ⎫ Add-and-
1204: for (i=0; i≤m−1; i++) {                                              ⎪ Double-
1205:    V'[1] = V'[0]*V[2] (mod n); // = a^(2ⁱ) * a^(d[i−1,0]) * r (mod n) ⎪ Always
                                                                          ⎪
1206:    V[2] = V[2]² (mod n);     // = a^(2^(i+1)) * r (mod n)           ⎬
1207:    V'[0] = V'[d[i]];     // = a^(2ⁱ*d[i]) * a^(d[i−1,0]) * r        ⎪
                                                                          ⎪
                               // = a^(d[i,0]) * r (mod n)                ⎭
1208: }
1209: V=V'[0] * r⁻¹ (mod n);       //multiply V'[0] by inverse element of r ⎫
1210:  return V;                   //output V =a^d (mod n)]                 ⎬
                                                                De-randomize
}
```

# FIG. 13

```
random_point() {
1301: Rx=random_Xcoordinate()        // generate random X-coordinate Rx
1302: Ry=XtoY(Rx)                     // determine Ry corresponding to Rx
1303: R=(Rx,Ry)                       // set R = (Rx, Ry)
1304: return R
}
```

# FIG. 14

```
random_point() {
1401: s=random_small ()        //  s is random number
1402: R=ScalarMult_AddandDoubleAlways(s,G)
                               // multiply base point by a to generate R
1403: return R
}
```

# FIG. 15

```
random_point() {
1501: load R        // read previous used R
                    initial value of R is generated in card initialization
1502: R=ECDBL(R)    // double previous R to be set as new R
1503: store R       // store R
```

# FIG. 16

```
random_point() {
    1601: load R=(R_X,R_Y,R_Z)  // read previous used R
                                 initial value of R is generated in card initialization
    1602: R=(t*R_X, t*R_Y, t*R_Z)  // multiply previous R coordiantes by t
                                     to generate new R (t is constant)
    1603: store R           // store R
}
```

# FIG. 17

```
random_point() {
    1601: load R=(R_X,R_Y,R_Z)  // read previous used R
                                 initial value of R is generated in card initialization
    1602: R=(t^2*R_X, t^3*R_Y, t*R_Z)  // multiply previous R coordiantes by t
                                        to generate new R (t is constant)
    1603: store R           // store R
}
```

# FIG. 18

```
ECDBL(P) {          // V[2]=P=(X_i,Y_i,Z_i)=2^i A
    if (i==0) {      // equal to i of d[i]
        R_i := Z_0^2
        R_i := R_i^2
        R_i := aR_i       // a is elliptic parameter
    } else {
        R_i := R_i T_{i-1}   // if i ≥ 1, use intermediate data T_{i-1} for i-1
    }
    M_i := 3X_i^2 + R_i
    Q_i := Y_i^2
    S_i := 4X_i Q_i
    T_i := 8Q_i^2
    Z_{i+1} := 2Y_i Z_i
    X_{i+1} := M_i^2 - 2(S_i)
    Y_{i+1} := (M_i)(S_i - X_i) - T_i
    P=(X_{i+1},Y_{i+1},Z_{i+1})     // output V[2]=P=2^{i+1}A
    return P;
}
```

# FIG. 19

```
ScalarMult_Randomized_Initvalue(A,d) {
1701: load R          // read previous used r              ⎫
1702: R=ECDBL(R) // double R for updating                 ⎪  Randomize Initial
1703: store R         // store updated R                    ⎬  Value of V[0]
1704: V'[0]=R                   // set intial value R to V'[0]  ⎪
1705: V[2]=A;                   // set initial value A to V[2] ⎭
1706: for (i=0; i≤m-1; i++) {                              ⎫  Add-and-
1707:    V'[1] = ECADD(V'[0],V[2]); // = 2ⁱA + (d[i-1,0])A+R  ⎪  Double-
                                                            ⎬  Always
1708:    V[2] = ECDBL(V[2]);    //perform V[2]=2^{i+1} by 2^k-multiplication ⎪
1709:    V'[0] = V'[d[i]];      // = (2ⁱ*d[i])A+(d[i-1,0])A+R=(d[i,0])A+R ⎪
1710: }                                                     ⎭
1711: V=ECSUB(V'[0], R);        // perform V=V'[0]-R=dA     ⎫
1712: return V;                 // output V = dA            ⎬  De-randomize
}
card.init() {                   //generate initial value of random point R
                                (called for card initialization)
 1713: s = random()             //generate random s
 1714: R = ScalarMult_AddandDoubleAlways(s,G) //multiply base point G by s
 1715: store R                  // store value of R
}
```

# FIG. 20

EP 1 648 111 B1

## REFERENCES CITED IN THE DESCRIPTION

### Patent documents cited in the description

- WO 0059157 A

- JP 2000137436 A, Takenaka and Ito

### Non-patent literature cited in the description

- Differential Power Anaysis. **P. KOCHER ; J. JAFFE ; B. JUN.** Crypto '99, LNCS. Springer-Verlag, 1999, vol. 1666, 388-397
- A Refined Power-Analysis Attack on Elliptic Curve Crypto-systems. **L. GOUBIN.** PKC 2003, LNCS 2567. Springer-Verlag, 2003
- Resistance against differential power analysis for elliptic curve cryptographic cryptosystem. **J. CORON.** CHES '99, LNCS. Springer-Verlag, 1999, vol. 1717, 292-302

- **P. MONTGOMERY.** Speeding the Pollard and elliptic curve methods for factorizations. *Math of Comp,* 1987, vol. 48, 243-264
- **IZU et al.** Comparison and Evaluation of Side Channel Attack Countermeasure for Elliptic Cryptosystem. *Symposium on Cryptography and Information Security,* 2003